(19) Europäisches Patentamt / European Patent Office / Office européen des brevets

(11) **EP 1 992 959 A2**

(12) **EUROPEAN PATENT APPLICATION**

(43) Date of publication:
**19.11.2008 Bulletin 2008/47**

(51) Int Cl.:
*G01S 3/80* (2006.01)

(21) Application number: **08103628.7**

(22) Date of filing: **21.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.05.2007 JP 2007133418**
**18.05.2007 JP 2007133419**

(71) Applicant: **ONO SOKKI CO., LTD.**
**Yokohama-shi**
**Kanagawa 226-8507 (JP)**

(72) Inventor: **OIE, Samon**
**Yokohama-shi, Kanagawa 226-8507 (JP)**

(74) Representative: **Stebbing, Timothy Charles**
**Haseltine Lake**
**5th Floor Lincoln House**
**300 High Holborn**
**London, WC1V 7JH (GB)**

(54) **Sound source search method, sound source search device, and sound source search program storage medium**

(57) The present invention relates to a sound source search method and the like for identifying sound source locations and improves the resolution as compared to the conventional delay-and-sum method. Time series data of multiple channels generated by multiple microphones picking up sounds generated from sound sources existing on the x-y plane of $Z = Z_S$ is acquired, the microphones aligned on the x-y plane of $Z = Z_H$. A spectrum of a desired angular frequency $\omega$ of a multiplicity of channels is generated by subjecting the acquired time series data of the multiplicity of channels to the discrete Fourier transform for each channel. Matrix elements $G(X_S|X'_S)$, $Q(X_S|X'_S)$, and $F^\dagger(X_S|X_H)$ are calculated based on the generated spectrum of the angular frequency $\omega$ of the multiplicity of channels, and $v_Z(X_S, z_S; \omega)$ is calculated by substituting the calculated matrix elements for simultaneous equations

$$\sum_n \left\{ G(X_{Sm} \mid X_{Sn}) + \lambda Q(X_{Sm} \mid X_{Sn}) \right\} v_Z(X_{Sn}, z_S; \omega) |\Delta X_S|$$

$$= \sum_n F^{(a,b)\dagger}(X_{Sm} \mid X_{Hn}) \frac{P_{Obs}(X_{Hn}, z_H; \omega)}{\rho_0 c_0} |\Delta X_H|$$

(8.1).

EP 1 992 959 A2

Fig. 1

**Description**

BACKGROUND OF THE INVENTION

Field of the Invention

The present invention relates to a sound source search method and a sound source search device for identifying sound source locations, and a sound source search program storage medium that stores a sound source search program executed in an arithmetic processor of a computer or the like and causing the arithmetic processor to operate as the sound source search device.

Description of the Related Art

Methods using microphone arrays represented by the delay-and-sum method have been conventionally known as methods for identifying sound source locations. While the methods are convenient in that the processes are executed based on data observed at locations distant from sound sources, the methods are disadvantageous in that the resolution lower than the order of the wavelength cannot be expected. In order to overcome the disadvantage, methods have been proposed in which data is acquired very close to the sound sources, i.e., at near fields where evanescent waves exist, and the particle velocity distributions on the sound source surfaces are estimated with back propagation to calculate the radiated sound field characteristics (See the following Non-patent Documents 1 and 2). On the one hand, the methods are revolutionary in that the resolutions are not limited by the wavelengths. On the other hand, the methods are disadvantageous in that the calculation points of the particle velocities are limited to on the sound receiving array points, or that many ghosts of the arrays are generated, thereby making the methods unusable unless the wavelengths of the sound waves are in a frequency range higher than the frequencies corresponding to the sizes of the sound receiving arrays (low frequency limit by the array length).
Non-patent Document 1: E.G. Williams, "Fourier Acoustics; Sound Radiation and Nearfield Acoustical Holography" (Academic Press, San Diego, 1999)
Non-patent Document 2: J. Hald, "Non-stationary STSF," Bruel & Kjaer Technical Review, No.1, pp. 1-36 (2000)
Non-patent Documents 3-5 and Patent Document 1 are also listed below for reference in derivation processes of formulas and embodiments described later.
Non-patent Document 3: A. Messiah, "Quantum Mechanics 1-3," (Tokyo Tosho, Tokyo, 1981-1982) (especially, 1)
Non-patent Document 4: Dirac, "Quantum Mechanics" (Iwanami Shoten, Tokyo, 1968)
Non-patent Document 5: L.S. Rodberg and R.M. Thaler, "Introduction to the Quantum Theory of Scattering" (Academic Press, New York, 1967)
Patent Document 1: Japanese Patent Application Publication No. 2002-278948

SUMMARY OF THE INVENTION

In view of the foregoing, it is an object of the present invention to provide a sound source search method and a sound source search device for acquiring data at a location more distant from the near field where the evanescent waves exist and in which the resolutions is improved as compared to the conventional delay-and-sum method, and a sound source search program storage medium that stores a sound source search program executed in an arithmetic processor of a computer or the like and causing the arithmetic processor to operate as a sound source search device adapted to identify sound sources in high resolution.
A first sound source search method of the present invention achieving the above abject includes:

a data acquisition step of acquiring time series data of multiple channels generated by picking up sounds generated from sound sources existing on the x-y plane of $z=z_S$ at multiple points dispersed on the x-y plane of $z=z_H$;
a spectrum calculation step of generating a spectrum with a desired angular frequency $\omega$ of the multiple channels by subjecting the time series data of the multiple channels acquired in the data acquisition step to the discrete Fourier transform for each channel;

a matrix element calculation step of calculating matrix elements $G\!\left(X_S \mid X_S'\right),\ Q\!\left(X_S \mid X_S'\right),$

and $F^\dagger(X_S \mid X_H)$, and by substituting the spectrum with the angular frequency $\omega$ of the multiple channels calculated in the spectrum generation step for formulas

$$G(X_S \mid X_S') = \sum_{\mu=1}^{M_H} G_\omega^{RB(-)}(X_{H\mu} \mid X_S) w_{H\mu} G_\omega^{RB(+)}(X_{H\mu} \mid X_S')$$

$$(6.13),$$

$$Q(X_S \mid X_S') =$$

$$= \frac{1}{k_0^{2\mu+2}} \int_0^{k_0} J_0(K|X_S - X_S'|) \cdot K^{2\mu+1} \frac{\left(k_0^2 - K^2\right)^{\nu'/2}}{k_0^{\nu'}} dK$$

$$+ \frac{1}{k_0^{2\mu+2}} \int_{k_0}^\infty \left\{ \begin{array}{l} J_0(K|X_S - X_S'|) \cdot \exp\left(-2\left(K^2 - k_0^2\right)^{1/2}(z_H - z_S)\right) \cdot \\ \cdot K^{2\mu+1} \cdot \dfrac{\left(K^2 - k_0^2\right)^{\nu'/2}}{k_0^{\nu'}} \end{array} \right\} dK$$

$$(7.3),$$

where, ($\mu \geq 0$, $\nu' \geq -1$), and

$$F^\dagger(X_S \mid X_H) = -j \frac{1}{k_0} \sum_{\mu=1}^{M_H} G_\omega^{RB(-)}(X_{H\mu} \mid X_S) w_{H\mu} \delta(X_H - X_{H\mu})$$

$$(6.14);$$

and

a sound source search step of calculating $v_z(X_S, z_S; \omega)$ by substituting the matrix elements $G(X_S \mid X_S')$,

$Q(X_S \mid X_S')$, and $F^\dagger(X_S|X_H)$ calculated in the matrix element calculation step for simultaneous equations

$$\sum_n \{G(X_{Sm} \mid X_{Sn}) + \lambda Q(X_{Sm} \mid X_{Sn})\} v_Z(X_{Sn}, z_S; \omega) |\Delta X_S|$$

$$= \sum_n F^{(a,b)\dagger}(X_{Sm} \mid X_{Hn}) \frac{P_{Obs}(X_{Hn}, z_H; \omega)}{\rho_0 c_0} |\Delta X_H|$$

(8.1)

and solving the simultaneous equations (8.1).

Here, in the first sound source search method according to the present invention, the sound source search step may be a step of calculating $v_z(X_S, z_S; \omega)$ by discretizing an observation point and a calculation point at the same density, substituting $G(X_S \mid X_S')$, $Q(X_S \mid X_S')$, and $F\dagger(X_S|X_H)$ for simultaneous equations

$$\sum_n \{G(X_{Sm} \mid X_{Sn}) + \lambda Q(X_{Sm} \mid X_{Sn})\} v_Z(X_{Sn}, z_S; \omega)$$

$$= \sum_n F^{(a,b)\dagger}(X_{Sm} \mid X_{Hn}) \frac{P_{Obs}(X_{Hn}, z_H; \omega)}{\rho_0 c_0}$$

(8.2),

in place of the simultaneous equations (8.1), and solving the simultaneous equations (8.2).

In the first sound source search method according to the present invention, the data acquisition step may be a step of acquiring the time series data of the multiple channels corresponding to the points by multiple microphones picking up sounds generated from sound sources existing on the x-y plane of $z=z_S$, the microphones placed at the multiple points on the x-y plane of $z = z_H$.

Alternatively, the data acquisition step may be a step of acquiring the time series data of the multiple channels corresponding to the points by a microphone picking up sounds generated from sound sources existing on the x-y plane of $z=z_S$, the microphone moving through the multiple points on the x-y plane of $z = z_H$.

A first sound source search device according to the present invention achieving the above object includes:

a data acquisition part acquiring time series data of multiple channels generated by picking up sounds generated from sound sources existing on the x-y plane of $z=z_S$ at multiple points dispersed on the x-y plane of $z=z_H$ ;

a spectrum calculation part calculating a spectrum with a desired angular frequency ω of the multiple channels by subjecting the time series data of the multiple channels acquired by the data acquisition part to the discrete Fourier transform for each channel;

a matrix element calculation part calculating matrix elements $G(X_S \mid X_S')$, $Q(X_S \mid X_S')$, and $F\dagger(X_S|X_H)$, by substituting the spectrum with the angular frequency ω of the multiple channels calculated by the spectrum calculation part for formulas

$$G\left(X_S \mid X_S'\right) = \sum_{\mu=1}^{M_H} G_\omega^{RB(-)}\left(X_{H\mu} \mid X_S\right) w_{H\mu} G_\omega^{RB(+)}\left(X_{H\mu} \mid X_S'\right)$$

$$(6.13)$$

$$Q\left(X_S \mid X_S'\right) =$$

$$= \frac{1}{k_0^{2\mu+2}} \int_0^{k_0} J_0\left(K|X_S - X_S'|\right) \cdot K^{2\mu+1} \frac{\left(k_0^2 - K^2\right)^{v'/2}}{k_0^{v'}} dK$$

$$+ \frac{1}{k_0^{2\mu+2}} \int_{k_0}^\infty \left\{ \begin{array}{l} J_0\left(K|X_S - X_S'|\right) \cdot \exp\left(-2\left(K^2 - k_0^2\right)^{1/2}\left(z_H - z_S\right)\right) \cdot \\ \cdot K^{2\mu+1} \cdot \dfrac{\left(K^2 - k_0^2\right)^{v'/2}}{k_0^{v'}} \end{array} \right\} dK$$

$$(7.3),$$

where, ($\mu \geq 0$, $v' \geq -1$), and

$$F^\dagger\left(X_S \mid X_H\right) = -j \frac{1}{k_0} \sum_{\mu=1}^{M_H} G_\omega^{RB(-)}\left(X_{H\mu} \mid X_S\right) w_{H\mu} \delta\left(X_H - X_{H\mu}\right)$$

$$(6.14);$$

and
a sound source search part calculating

$v_z(X_S, z_S; \omega)$ by substituting the matrix elements $G\left(X_S \mid X_S'\right)$, $Q\left(X_S \mid X_S'\right)$, and $F^\dagger(X_S|X_H)$ calculated in the matrix element calculation part for simultaneous equations

$$\sum_n \left\{ G\left( X_{Sm} \mid X_{Sn} \right) + \lambda Q\left( X_{Sm} \mid X_{Sn} \right) \right\} v_Z\left( X_{Sn}, z_S; \omega \right) \left| \Delta X_S \right|$$

$$= \sum_n F^{(a,b)\dagger}\left( X_{Sm} \mid X_{Hn} \right) \frac{P_{Obs}\left( X_{Hn}, z_H; \omega \right)}{\rho_0 c_0} \left| \Delta X_H \right|$$

$$(8.1)$$

and solving the simultaneous equations (8.1).

Here, in the first sound source search device according to the present invention, the sound source search device may be a device that discretizes the observation point and the calculation point at the same density, and the sound source search part calculates $v_z(X_S, z_S; \omega)$ by discretizing an observation point and a calculation point at the same density, substituting $G\left( X_S \mid X_S' \right)$, $Q\left( X_S \mid X_S' \right)$, and $F^\dagger(X_S|X_H)$ for simultaneous equations

$$\sum_n \left\{ G\left( X_{Sm} \mid X_{Sn} \right) + \lambda Q\left( X_{Sm} \mid X_{Sn} \right) \right\} v_Z\left( X_{Sn}, z_S; \omega \right)$$

$$= \sum_n F^{(a,b)\dagger}\left( X_{Sm} \mid X_{Hn} \right) \frac{P_{Obs}\left( X_{Hn}, z_H; \omega \right)}{\rho_0 c_0} \qquad (8.2),$$

in place of the simultaneous equations (8.1), and solving the simultaneous equations (8.2).

Further, in the first sound source search device according to the present invention, the data acquisition part may acquire the time series data of the multiple channels corresponding to the points by multiple microphones picking up sounds generated from sound sources existing on the x-y plane of $z=z_S$, the microphones placed at the multiple points on the x-y plane of $z=z_H$.

Alternatively, the data acquisition part may acquire the time series data of the multiple channels corresponding to the points by a microphone picking up sounds generated from sound sources existing on the x-y plane of $z=z_S$, the microphone moving through the multiple points on the x-y plane of $z=z_H$.

A first sound source search program storage medium that stores a sound source search program executed in an arithmetic processor executing programs and causing the arithmetic processor to operate as a sound source identification device, the sound source identification device including:

a data acquisition part acquiring time series data of multiple channels generated by picking up sounds generated from sound sources existing on the x-y plane of $z=z_S$ at multiple points dispersed on the x-y plane of $z=z_H$;

a spectrum calculation part calculating a spectrum with a desired angular frequency $\omega$ of the multiple channels by subjecting the time series data of the multiple channels acquired by the data acquisition part to the discrete Fourier transform for each channel;

a matrix element calculation part calculating matrix elements $G\left( X_S \mid X_S' \right)$, $Q\left( X_S \mid X_S' \right)$, and $F^\dagger(X_S|X_H)$, by substituting the spectrum with the angular frequency $\omega$ of the multiple channels calculated by the spectrum calculation part for formulas

$$G\left(X_S \mid X_S'\right) = \sum_{\mu=1}^{M_H} G_\omega^{RB(-)}\left(X_{H\mu} \mid X_S\right) w_{H\mu} G_\omega^{RB(+)}\left(X_{H\mu} \mid X_S'\right)$$

(6.13)

$$\mathcal{Q}\left(X_S \mid X_S'\right) =$$

$$= \frac{1}{k_0^{2\mu+2}} \int_0^{k_0} J_0\left(K|X_S - X_S'|\right) \cdot K^{2\mu+1} \frac{\left(k_0^2 - K^2\right)^{\nu'/2}}{k_0^{\nu'}} dK$$

$$+ \frac{1}{k_0^{2\mu+2}} \int_{k_0}^{\infty} \left\{ \begin{array}{l} J_0\left(K|X_S - X_S'|\right) \cdot \exp\left(-2\left(K^2 - k_0^2\right)^{1/2}\left(z_H - z_S\right)\right) \cdot \\ \cdot K^{2\mu+1} \cdot \dfrac{\left(K^2 - k_0^2\right)^{\nu'/2}}{k_0^{\nu'}} \end{array} \right\} dK$$

(7.3),

where, ($\mu \geq 0$, $\nu' \geq -1$), and

$$F^\dagger\left(X_S \mid X_H\right) = -j\frac{1}{k_0}\sum_{\mu=1}^{M_H} G_\omega^{RB(-)}\left(X_{H\mu} \mid X_S\right) w_{H\mu} \delta\left(X_H - X_{H\mu}\right)$$

(6.14);

and

a sound source search part calculating $v_z(X_S, z_S; \omega)$ by substituting the matrix elements $G\left(X_S \mid X_S'\right)$, $\mathcal{Q}\left(X_S \mid X_S'\right)$, and $F^\dagger(X_S|X_H)$ calculated in the matrix element calculation part for simultaneous equations

$$\sum_{n}\left\{G\left(X_{Sm}\mid X_{Sn}\right)+\lambda Q\left(X_{Sm}\mid X_{Sn}\right)\right\}v_{Z}\left(X_{Sn},z_{S};\omega\right)\left|\Delta X_{S}\right|$$

$$=\sum_{n}F^{(a,b)\dagger}\left(X_{Sm}\mid X_{Hn}\right)\frac{P_{Obs}\left(X_{Hn},z_{H};\omega\right)}{\rho_{0}c_{0}}\left|\Delta X_{H}\right|$$

$$(8.1)$$

and solving the simultaneous equations (8.1).

Here, in the first sound source search program storage medium according to the present invention, the sound source search program may cause discretization of an observation point and a calculation point at the same density, and the sound source search part calculates $v_Z(X_S, z_S; \omega)$ by discretizing an observation point and a calculation point at the same density, substituting $G\left(X_S \mid X_S'\right)$, $Q\left(X_S \mid X_S'\right)$, and $F\dagger(X_S|X_H)$ for simultaneous equations

$$\sum_{n}\left\{G\left(X_{Sm}\mid X_{Sn}\right)+\lambda Q\left(X_{Sm}\mid X_{Sn}\right)\right\}v_{Z}\left(X_{Sn},z_{S};\omega\right)$$

$$=\sum_{n}F^{(a,b)\dagger}\left(X_{Sm}\mid X_{Hn}\right)\frac{P_{Obs}\left(X_{Hn},z_{H};\omega\right)}{\rho_{0}c_{0}} \qquad (8.2),$$

in place of the simultaneous equations (8.1), and solving the simultaneous equations (8.2).

Further, in the first sound source search program storage medium according to the present invention, the data acquisition part may acquire the time series data of the multiple channels corresponding to the points by multiple microphones picking up sounds generated from sound sources existing on the x-y plane of $z=z_S$, the microphones placed at the multiple points on the x-y plane of $z=z_H$.

Alternatively, the data acquisition part may acquire the time series data of the multiple channels corresponding to the points by a microphone picking up sounds generated from sound sources existing on the x-y plane of $z=z_S$, the microphone moving through the multiple points on the x-y plane of $z=z_H$.

A second sound source search method according to the present invention achieving the above object includes:

a data acquisition step of acquiring time series data of multiple channels generated by picking up sounds generated from sound sources existing on the x-y plane of $z=z_S$ at multiple points dispersed on the x-y plane of $z=z_H$;
a spectrum calculation step of generating a spectrum with a desired angular frequency $\omega$ of the multiple channels by subjecting the time series data of the multiple channels acquired in the data acquisition step to the discrete Fourier transform for each channel;
a matrix element calculation step of calculating matrix elements $G(X_{Sm}|X_{Sn})$, $Q(X_{Sm}|(X_{Sn})$, and $F^{(a,b)\dagger}(X_{Sm}|X_{Hn})$ by substituting the spectrum with the angular frequency $\omega$ of the multiple channels generated in the spectrum generation step for formulas

$$G\left(X_S \mid X_S'\right)=\int\langle X_S \mid K\rangle H^{(\bullet)*}(K)W(K)H^{(\bullet)}(K)\langle K \mid X_S'\rangle dK$$

$$(14.12),$$

$$Q(X_S \mid X_S') = \int \langle X_S | K \rangle D^*(K) D(K) \langle K | X_S' \rangle dK \quad (14.13),$$

and

$$F^\dagger(X_S \mid X_H) = \rho_0 c_0 \int \langle X_S | K \rangle H^{(\bullet)^*}(K) W(K) \langle K | X_H \rangle dK$$

$$(14.14a);$$

and
a sound source search step of calculating $\chi(X_{Sn},z_S;\omega)$ by substituting the matrix elements $G(X_{Sm}|X_{Sn})$, $Q(X_{Sm}|X_{Sn})$, and $F^{(a,b)\dagger}(X_{Sm}|X_{Hn})$ calculated in the matrix element calculation step for simultaneous equations

$$\sum_n \{G(X_{Sm} \mid X_{Sn}) + \lambda Q(X_{Sm} \mid X_{Sn})\} \chi(X_{Sn}, z_S; \omega) |\Delta X_S|$$

$$= \sum_n F^{(a,b)\dagger}(X_{Sm} \mid X_{Hn}) \frac{P_{Obs}(X_{Hn}, z_H; \omega)}{\rho_0 c_0} |\Delta X_H|$$

$$\cdots (15.1)$$

and solving the simultaneous equations (15.1).

The sound source search step may be a step of calculating $\chi(X_{Sn},z_S;\omega)$ by discretizing an observation point and a calculation point at the same density, substituting $G(X_{Sm}|X_{Sn})$, $Q(X_{Sm}|X_{Sn})$, and $F^{(a,b)\dagger}(X_{Sm}|X_{Hn})$ for simultaneous equations

$$\sum_n \{G(X_{Sm} \mid X_{Sn}) + \lambda Q(X_{Sm} \mid X_{Sn})\} \chi(X_{Sn}, z_S; \omega)$$

$$= \sum_n F^{(a,b)\dagger}(X_{Sm} \mid X_{Hn}) \frac{P_{Obs}(X_{Hn}, z_H; \omega)}{\rho_0 c_0}$$

$$\cdots (15.2)$$

, in place of the simultaneous equations (15.1), and solving the simultaneous equations (15.2).
Preferably, the sound source search step is a step of calculating $\chi(X_{Sn},z_S;\omega)=V_z(X_{Sn},z_S;\omega)$.
Preferably, the matrix element calculation step is a step of calculating the matrix element $G(X_{Sm}|X_{Sn})$ by substituting the spectrum of the angular frequency $\omega$ of the multiple channels calculated in the spectrum calculation step for formula

$$G\left(X_S \mid X_S'\right) =$$

$$= \frac{1}{k_0{}^2} \int_0^{k_0} J_0\left(K\left|X_S - X_S'\right|\right) \frac{\left(k_0{}^2 - K^2\right)^{(\nu-2)/2}}{k_0{}^{\nu-2}} K dK$$

$$+ \frac{1}{k_0{}^2} \int_{k_0}^{\infty} J_0\left(K\left|X_S - X_S'\right|\right) \cdot \exp\left(-2\left(K^2 - k_0{}^2\right)^{1/2}\left(z_H - z_S\right)\right) \cdot \frac{\left(K^2 - k_0{}^2\right)^{(\nu-2)/2}}{k_0{}^{\nu-2}} K dK$$

$$\ldots (16.2)$$

adopting

$$W(K) = \frac{\left|\varsigma_C(K; k_0)\right|^{-\nu}}{2\pi(\rho_0 c_0)^2 k_0{}^2} = \frac{1}{2\pi(\rho_0 c_0)^2 k_0{}^2} \left|\frac{\Gamma(K; k_0)}{k_0}\right|^{\nu}, \quad (\nu \geq 1)$$

$$\ldots (16.1)$$

as $W(K)$ in Formula (14.12), in place of the Formula (14.12), when calculating the matrix element $G(X_{Sm}|X_{Sn})$.

Preferably, the matrix element calculation step is a step of calculating the matrix element $Q(X_{Sm}|X_{Sn})$ by substituting the spectrum of the angular frequency $\omega$ of the multiple channels calculated in the spectrum calculation step for formula

$$Q(X_S \mid X_S') =$$

$$= \frac{1}{k_0^{2\mu+2}} \int_0^{k_0} J_0(K|X_S - X_S'|) \cdot K^{2\mu+1} \frac{\left(k_0^2 - K^2\right)^{\nu/2}}{k_0^{\nu}} dK$$

$$+ \frac{1}{k_0^{2\mu+2}} \int_{k_0}^{\infty} \frac{J_0(K|X_S - X_S'|) \cdot \exp\left(-2\left(K^2 - k_0^2\right)^{1/2}(z_H - z_S)\right)}{\cdot K^{2\mu+1} \cdot \frac{\left(K^2 - k_0^2\right)^{\nu/2}}{k_0^{\nu}}} dK$$

$$\cdots (16.5)$$

adopting

$$D^*(K)D(K)$$

$$= \frac{1}{2\pi \cdot k_0^{2\mu+2}} K^{2\mu} \left| \frac{\Gamma(K; k_0)}{k_0} \right|^{\nu'} \exp\left(j\left(\Gamma^*(K; k_0) - \Gamma(K; k_0)\right)(z_H - z_S)\right)$$

$$(\mu \geq 0, \quad \nu' \geq -1)$$

$$\cdots (16.4)$$

as $D^*(K)D(K)$ in Formula (14.13), in place of the Formula (14.13), when calculating the matrix element $Q(X_{Sm}|X_{Sn})$.

Preferably, the matrix element calculation step is a step of calculating the matrix element $F^{(a,b)\dagger}(X_{Sm}|X_{Hn})$ by substituting the spectrum of the angular frequency $\omega$ of the multiple channels calculated in the spectrum calculation step for formula

$$F^\dagger\left(X_S \mid X_H\right) =$$

$$= \frac{1}{k_0^2} \cdot \int_0^{k_0} J_0\left(K|X_S - X_H|\right) \cdot \frac{\left(k_0^2 - K^2\right)^{(\nu-1)/2}}{k_0^{\nu-1}} \cdot$$

$$\cdot \exp\left(j\Gamma\left(K; k_0\right)\left(z_H - z_S\right)\right) K dK$$

$$- j\frac{1}{k_0^2} \int_{k_0}^\infty J_0\left(K|X_S - X_H|\right) \cdot \frac{\left(K^2 - k_0^2\right)^{(\nu-1)/2}}{k_0^{\nu-1}} \cdot$$

$$\cdot \exp\left(-\left(K^2 - k_0^2\right)^{1/2}\left(z_H - z_S\right)\right) K dK$$

$$\dots (16.3)$$

adopting

$$W(K) = \frac{\left|\zeta_C\left(K; k_0\right)\right|^{-\nu}}{2\pi\left(\rho_0 c_0\right)^2 k_0^2} = \frac{1}{2\pi\left(\rho_0 c_0\right)^2 k_0^2} \left|\frac{\Gamma\left(K; k_0\right)}{k_0}\right|^\nu, \quad (\nu \geq 1)$$

$$\dots (16.1)$$

as $W(K)$ in Formula (14.14a), in place of the Formula (14.14a), when calculating the matrix element $F^{(a,b)\dagger}(X_{Sm}|X_{Hn})$.

In the sound source search method of the present invention, the data acquisition step may be a step of acquiring the time series data of the multiple channels corresponding to the points by multiple microphones picking up sounds generated from sound sources existing on the x-y plane of $z=z_S$, the microphones placed at the multiple points on the x-y plane of $z=z_H$, or the data acquisition step may be a step of acquiring the time series data of the multiple channels corresponding to the points by a microphone picking up sounds generated from sound sources existing on the x-y plane of $z=z_S$, the microphone moving through the multiple points on the x-y plane of $z=z_H$.

A second sound source search device according to the present invention achieving the above object includes:

a data acquisition part acquiring time series data of multiple channels generated by picking up sounds generated from sound sources existing on the x-y plane of $z = z_S$ at multiple points dispersed on the x-y plane of $z = z_H$;

a spectrum calculation part calculating a spectrum with a desired angular frequency $\omega$ of the multiple channels by subjecting the time series data of the multiple channels acquired by the data acquisition part to the discrete Fourier transform for each channel;

a matrix element calculation part calculating matrix elements $G(X_{Sm}| X_{Sn})$, $Q(X_{Sm}| X_{Sn})$, and $F^{(a,b)\dagger}(X_{Sm}|X_{Hn})$ by substituting the spectrum with the angular frequency $\omega$ of the multiple channels calculated by the spectrum calculation part for formulas

$$G\left(X_S \mid X_S'\right) = \int \left\langle X_S \mid K\right\rangle H^{(\bullet)^*}(K) W(K) H^{(\bullet)}(K)\left\langle K \mid X_S'\right\rangle dK$$

$$\dots (14.12),$$

$$Q\left(X_S \mid X_S'\right) = \int \langle X_S \mid K \rangle D^*(K) D(K) \langle K \mid X_S' \rangle dK \quad \dots (14.13),$$

and

$$F^{\dagger}\left(X_S \mid X_H\right) = \rho_0 c_0 \int \langle X_S \mid K \rangle H^{(\cdot)*}(K) W(K) \langle K \mid X_H \rangle dK$$

$$\dots (14.14a);$$

and
a sound source search part calculating $\chi(X_{Sn}, z_S; \omega)$ by substituting the matrix elements $G(X_{Sm}|X_{Sn})$, $Q(X_{Sm}|X_{Sn})$, and $F^{(a,b)\dagger}(X_{Sm}|X_{Hn})$ calculated by the matrix element calculation part for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn}, z_S; \omega\right) \left| \Delta X_S \right|$$

$$= \sum_n F^{(a,b)\dagger}\left(X_{Sm} \mid X_{Hn}\right) \frac{P_{Obs}\left(X_{Hn}, z_H; \omega\right)}{\rho_0 c_0} \left| \Delta X_H \right|$$

$$\dots (15.1)$$

and solving the simultaneous equations (15.1).

The second sound source search device of the present invention may discretize the observation point and the calculation point at the same density, and the sound source search part may calculate $\chi(X_{Sn}, z_S; \omega)$ by substituting $G(X_{Sm}|X_{Sn})$, $Q(X_{Sm}|X_{Sn})$, and $F^{(a,b)\dagger}(X_{Sm}|X_{Hn})$ for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn}, z_S; \omega\right)$$

$$= \sum_n F^{(a,b)\dagger}\left(X_{Sm} \mid X_{Hn}\right) \frac{P_{Obs}\left(X_{Hn}, z_H; \omega\right)}{\rho_0 c_0}$$

$$\dots (15.2),$$

in place of the simultaneous equations (15.1), and solving the simultaneous equations (15.2).
Preferably, the sound source search part calculates $\chi(X_{Sn}, z_S; \omega) = V_z(X_{Sn}, z_S; \omega)$.
Preferably, the matrix element calculation part calculates the matrix element $G(X_{Sm}|X_{Sn})$ by substituting the spectrum of the angular frequency $\omega$ of the multiple channels calculated by the spectrum calculation part for formula

$$G\left(X_S \mid X'_S\right) =$$

$$= \frac{1}{k_0{}^2} \int_0^{k_0} J_0\left(K|X_S - X'_S|\right) \frac{\left(k_0{}^2 - K^2\right)^{(\nu-2)/2}}{k_0{}^{\nu-2}} K dK$$

$$+ \frac{1}{k_0{}^2} \int_{k_0}^{\infty} \frac{J_0\left(K|X_S - X'_S|\right) \cdot \exp\left(-2\left(K^2 - k_0{}^2\right)^{1/2}\left(z_H - z_S\right)\right) \cdot \left(K^2 - k_0{}^2\right)^{(\nu-2)/2}}{k_0{}^{\nu-2}} K dK$$

$$\dots (16.2)$$

adopting

$$W(K) = \frac{\left|\zeta_C\left(K; k_0\right)\right|^{-\nu}}{2\pi\left(\rho_0 c_0\right)^2 k_0{}^2} = \frac{1}{2\pi\left(\rho_0 c_0\right)^2 k_0{}^2} \left|\frac{\Gamma\left(K; k_0\right)}{k_0}\right|^{\nu}, \quad (\nu \geq 1)$$

$$\dots (16.1)$$

as $W(K)$ in Formula (14.12), in place of the Formula (14.12), when calculating the matrix element $G(X_{Sm} |XS_n)$.

Preferably, the matrix element calculation part calculates the matrix element $Q(X_{Sm} |X_{Sn})$ by substituting the spectrum of the angular frequency $\omega$ of the multiple channels calculated by the spectrum calculation part for formula

$$Q(X_S \mid X_S') =$$

$$= \frac{1}{k_0^{2\mu+2}} \int_0^{k_0} J_0(K|X_S - X_S'|) \cdot K^{2\mu+1} \frac{\left(k_0^2 - K^2\right)^{\nu/2}}{k_0^\nu} dK$$

$$+ \frac{1}{k_0^{2\mu+2}} \int_{k_0}^\infty \frac{J_0(K|X_S - X_S'|) \cdot \exp\left(-2\left(K^2 - k_0^2\right)^{1/2}(z_H - z_S)\right) \cdot}{k_0^\nu} \cdot K^{2\mu+1} \cdot \frac{\left(K^2 - k_0^2\right)^{\nu/2} \cdot}{k_0^\nu} dK$$

$$\ldots (16.5)$$

adopting

$$D^*(K)D(K)$$

$$= \frac{1}{2\pi \cdot k_0^{2\mu+2}} K^{2\mu} \left|\frac{\Gamma(K;k_0)}{k_0}\right|^{\nu'} \exp\left(j\left(\Gamma^*(K;k_0) - \Gamma(K;k_0)\right)(z_H - z_S)\right)$$

$$\left(\mu \ge 0, \quad \nu' \ge -1\right)$$

$$\ldots (16.4)$$

as $D^*(K)D(K)$ in Formula (14.13), in place of the Formula (14.13), when calculating the matrix element $Q(X_{Sm} \mid X_{Sn})$.

Preferably, the matrix element calculation part calculates the matrix element $F^{(a,b)\dagger}(X_{Sm} \mid X_{Hn})$ by substituting the spectrum of the angular frequency $\omega$ of the multiple channels calculated by the spectrum calculation part for formula

$$F^{\dagger}\left(X_S \mid X_H\right) =$$

$$= \frac{1}{k_0{}^2} \int_0^{k_0} J_0\left(K|X_S - X_H|\right) \cdot \frac{\left(k_0{}^2 - K^2\right)^{(\nu-1)/2}}{k_0{}^{\nu-1}} \cdot$$

$$\cdot \exp\left(j\Gamma(K;k_0)(z_H - z_S)\right) K dK$$

$$- j \frac{1}{k_0{}^2} \int_{k_0}^{\infty} J_0\left(K|X_S - X_H|\right) \cdot \frac{\left(K^2 - k_0{}^2\right)^{(\nu-1)/2}}{k_0{}^{\nu-1}} \cdot$$

$$\cdot \exp\left(-\left(K^2 - k_0{}^2\right)^{1/2}(z_H - z_S)\right) K dK$$

$$\dots (16.3)$$

adopting

$$W(K) = \frac{|\zeta_C(K;k_0)|^{-\nu}}{2\pi(\rho_0 c_0)^2 k_0{}^2} = \frac{1}{2\pi(\rho_0 c_0)^2 k_0{}^2} \left|\frac{\Gamma(K;k_0)}{k_0}\right|^{\nu}, \quad (\nu \geq 1)$$

$$\dots (16.1)$$

as $W(K)$ in Formula (14.14a), in place of the Formula (14.14a), when calculating the matrix element $F^{(a,b)\dagger}(X_{Sm}|X_{Hn})$.

In the second sound source search device of the present invention, the data acquisition part may acquire the time series data of the multiple channels corresponding to the points by multiple microphones picking up sounds generated from sound sources existing on the x-y plane of $z=z_S$, the microphones placed at the multiple points on the x-y plane of $z=z_H$, or the data acquisition part may acquire the time series data of the multiple channels corresponding to the points by a microphone picking up sounds generated from sound sources existing on the x-y plane of $z=z_S$, the microphone moving through the multiple points on the x-y plane of $z=z_H$.

A second sound source search program storage medium according to the present invention achieving the above object is a storage medium that stores a sound source search program executed in an arithmetic processor executing programs and causing the arithmetic processor to operate as a sound source identification device, the sound source identification device including:

a data acquisition part acquiring time series data of multiple channels generated by picking up sounds generated from sound sources existing on the x-y plane of $z=z_S$ at multiple points dispersed on the x-y plane of $z=z_H$;

a spectrum calculation part calculating a spectrum with a desired angular frequency $\omega$ of the multiple channels by subjecting the time series data of the multiple channels acquired by the data acquisition part to the discrete Fourier transform for each channel;

a matrix element calculation part calculating matrix elements $G(X_{Sm}|X_{Sn})$, $Q(X_{Sm}|X_{Sn})$, and $F^{(a,b)\dagger}(X_{Sm}|X_{Hn})$ by substituting the spectrum with the

$$G\left(X_S \mid X_S'\right) = \int \left\langle X_S \mid K \right\rangle H^{(\bullet)^*}(K) W(K) H^{(\bullet)}(K) \left\langle K \mid X_S' \right\rangle dK$$

$$\ldots (14.12),$$

$$G\left(X_S \mid X_S'\right) = \int \left\langle X_S \mid K \right\rangle H^{(\bullet)^*}(K) W(K) H^{(\bullet)}(K) \left\langle K \mid X_S' \right\rangle dK$$

$$\ldots (14.12),$$

and

$$F^\dagger\left(X_S \mid X_H\right) = \rho_0 c_0 \int \left\langle X_S \mid K \right\rangle H^{(\bullet)^*}(K) W(K) \left\langle K \mid X_H \right\rangle dK$$

$$\ldots (14.14a);$$

and
a sound source search part calculating $\chi(X_{Sn},z_S;\omega)$ by substituting the matrix elements $G(X_{Sm}|X_{Sn})$, $Q(X_{Sm}|X_{Sn})$, and $F^{(a,b)\dagger}(X_{Sm}|X_{Hn})$ calculated by the matrix element calculation part for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn},z_S;\omega\right) \left| \Delta X_S \right|$$

$$= \sum_n F^{(a,b)\dagger}\left(X_{Sm} \mid X_{Hn}\right) \frac{P_{Obs}\left(X_{Hn},z_H;\omega\right)}{\rho_0 c_0} \left| \Delta X_H \right|$$

$$\ldots (15.1)$$

and solving the simultaneous equations (15.1).

The second sound source search program of the present invention may cause discretization of an observation point and a calculation point at the same density, and the sound source search part may calculate $\chi(X_{Sn},z_S;\omega)$ by substituting $G(X_{Sm}|X_{Sn})$, $Q(X_{Sm}|X_{Sn})$, and $F^{(a,b)\dagger}(X_{Sm}|X_{Hn})$ for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn},z_S;\omega\right)$$

$$= \sum_n F^{(a,b)\dagger}\left(X_{Sm} \mid X_{Hn}\right) \frac{P_{Obs}\left(X_{Hn},z_H;\omega\right)}{\rho_0 c_0}$$

$$\ldots (15.2),$$

in place of the simultaneous equations (15.1) and solving the simultaneous equations (15.2).

Preferably, the sound source search part calculates $\chi(\mathbf{X}_{Sn}, z_S; \omega) = V_Z(\mathbf{X}_{Sn}, z_S; \omega)$.

Preferably, the matrix element calculation part calculates the matrix element $G(\mathbf{X}_{Sm}|\mathbf{X}_{Sn})$ by substituting the spectrum of the angular frequency $\omega$ of the multiple channels calculated by the spectrum calculation part for formula

$$
G(X_S \mid X_S') =
$$

$$
= \frac{1}{k_0^2} \int_0^{k_0} J_0(K|X_S - X_S'|) \frac{\left(k_0^2 - K^2\right)^{(\nu-2)/2}}{k_0^{\nu-2}} K dK
$$

$$
+ \frac{1}{k_0^2} \int_{k_0}^{\infty} \frac{J_0(K|X_S - X_S'|) \cdot \exp\left(-2\left(K^2 - k_0^2\right)^{1/2}(z_H - z_S)\right)}{k_0^{\nu-2}} K dK
$$

$$
\cdots (16.2)
$$

adopting

$$
W(K) = \frac{|\varsigma_C(K; k_0)|^{-\nu}}{2\pi(\rho_0 c_0)^2 k_0^2} = \frac{1}{2\pi(\rho_0 c_0)^2 k_0^2} \left|\frac{\Gamma(K; k_0)}{k_0}\right|^{\nu}, \quad (\nu \geq 1)
$$

$$
\cdots (16.1)
$$

as $W(\mathbf{K})$ in Formula (14.12), in place of the Formula (14.12), when calculating the matrix element $G(\mathbf{X}_{Sm}|\mathbf{X}_{Sn})$.

Preferably, the matrix element calculation part calculates the matrix element $Q(\mathbf{X}_{Sm}|\mathbf{X}_{Sn})$ by substituting the spectrum of the angular frequency $\omega$ of the multiple channels calculated by the spectrum calculation part for formula

$$Q\left(X_S \mid X_S'\right) =$$

$$= \frac{1}{k_0^{2\mu+2}} \int_0^{k_0} J_0\left(K|X_S - X_S'|\right) \cdot K^{2\mu+1} \frac{\left(k_0^2 - K^2\right)^{\nu/2}}{k_0^{\nu}} dK$$

$$+ \frac{1}{k_0^{2\mu+2}} \int_{k_0}^{\infty} \frac{J_0\left(K|X_S - X_S'|\right) \cdot \exp\left(-2\left(K^2 - k_0^2\right)^{1/2}\left(z_H - z_S\right)\right) \cdot}{k_0 \cdot K^{2\mu+1} \cdot \frac{\left(K^2 - k_0^2\right)^{\nu/2}}{k_0^{\nu}}} dK$$

$$\cdots (16.5)$$

adopting

$$D^*\left(K\right)D\left(K\right)$$

$$= \frac{1}{2\pi \cdot k_0^{2\mu+2}} K^{2\mu} \left|\frac{\Gamma\left(K; k_0\right)}{k_0}\right|^{\nu'} \exp\left(j\left(\Gamma^*\left(K; k_0\right) - \Gamma\left(K; k_0\right)\right)\left(z_H - z_S\right)\right)$$

$$\left(\mu \ge 0, \quad \nu' \ge -1\right)$$

$$\cdots (16.4)$$

as $D^*(K)D(K)$ in Formula (14.13), in place of the Formula (14.13), when calculating the matrix element $Q(X_{Sm}|X_{Sn})$.

Preferably, the matrix element calculation part calculates the matrix element $F^{(a,b)\dagger}(X_{Sm}|X_{Hn})$ by substituting the spectrum of the angular frequency $\omega$ of the multiple channels calculated by the spectrum calculation part for formula

$$F^{\dagger}\left(X_S \mid X_H\right) =$$

$$= \frac{1}{k_0^2} \int_0^{k_0} J_0\left(K|X_S - X_H|\right) \cdot \frac{\left(k_0^2 - K^2\right)^{(\nu-1)/2}}{k_0^{\nu-1}} \cdot$$

$$\cdot \exp\left(j\Gamma(K;k_0)(z_H - z_S)\right) K dK$$

$$- j\frac{1}{k_0^2} \int_{k_0}^{\infty} J_0\left(K|X_S - X_H|\right) \cdot \frac{\left(K^2 - k_0^2\right)^{(\nu-1)/2}}{k_0^{\nu-1}} \cdot$$

$$\cdot \exp\left(-\left(K^2 - k_0^2\right)^{1/2}(z_H - z_S)\right) K dK \qquad \dots (16.3)$$

adopting

$$W(K) = \frac{\left|\zeta_C(K;k_0)\right|^{-\nu}}{2\pi(\rho_0 c_0)^2 k_0^2} = \frac{1}{2\pi(\rho_0 c_0)^2 k_0^2}\left|\frac{\Gamma(K;k_0)}{k_0}\right|^{\nu}, \quad (\nu \geq 1)$$

$$\dots (16.1)$$

as $W(K)$ in Formula (14.14a), in place of the Formula (14.14a), when calculating the matrix element $F^{(a,b)\dagger}(X_{Sm}|X_{Hn})$.

In the second sound source search program of the present invention too, the data acquisition part may acquire the time series data of the multiple channels corresponding to the points by multiple microphones picking up sounds generated from sound sources existing on the x-y plane of $z=z_S$, the microphones placed at the multiple points on the x-y plane of $z=z_H$, or the data acquisition part may acquire the time series data of the multiple channels corresponding to the points by a microphone picking up sounds generated from sound sources existing on the x-y plane of $z=z_S$, the microphone moving through the multiple points on the x-y plane of $z=z_H$.

According to the present invention, sound source locations can be identified in high resolution.

BRIEF DESCRIPTION OF THE DRAWINGS

Fig. 1 depicts a layout of sound sources and a microphone array;
Fig. 2 is an external perspective view of a sound source search computer operating as an embodiment of a sound source search device of the present invention;
Fig. 3 is a hardware block diagram of the sound source search computer 100 shown in Fig. 2;
Fig. 4 depicts a configuration of a peak location search program as an embodiment of the present invention;
Fig. 5 is a flow chart of a configuration of a sound source search method as an embodiment of the present invention;
Fig. 6 is a functional block diagram of an embodiment of the sound source search device of the present invention;
Fig. 7 depicts a calculation result by the Fourier transform method that has been conventionally widely used and that is an analytical method of the near-field acoustical holography; and
Fig. 8 depicts a particle velocity distribution obtained in accordance with an embodiment of the first invention.
Fig. 9 depicts a particle velocity distribution obtained in accordance with an embodiment of the second invention.

DETAILED DESCRIPTION OF THE PREFERRED EMBODIMENTS

1. Introduction

A solution when treating the near-field acoustical holography as an inverse problem will now be summarized before describing the embodiments of the present invention. The concept is based on general operator theory.

A list of symbols is shown below. Although most of the symbols are used as listed below, the same character may at times be used as a different meaning as there is a limit to the characters. However, confusion can be avoided from the context.

$\omega$: angular frequency

$f$: frequency

$C_0$: propagation velocity relative to the finite-amplitude sound wave

$\rho_0$: fluid density at equilibrium

$k_0 = \omega/c_0$ : wavenumber of finite-amplitude sound wave in free space

$p$ : minute fluctuation of fluid density, sound pressure

$v, V$ : particle velocity vector

$\lambda$: Lagrange multiplier

$X$ : two-dimensional coordinate, abbreviation of

$X = (x, y)$

$K$ : two-dimensional wavenumber, abbreviation of

$K = (K_x, K_y)$

$K$ : absolute value of two-dimensional wavenumber, i.e.,

$$K = |K| = \left(K_x{}^2 + K_y{}^2\right)^{1/2}$$

$A^\dagger$ : Hermitian conjugate operator of operator $A$

First of all, a first invention according to the present invention will be described.

2. Description of Sound Propagation

Now, a sound source is assumed to be on the surface of $z = z_S$. Using the velocity potential $\varphi(x,y,z;\omega) = \varphi(X,z;\omega)$ in the condition of $z \geq z_S$, the sound field in the condition of $z \geq z_S$ is expressed as $v(X,z;\omega) = -\nabla\varphi(X,z;\omega)$ ... (2.1) and $p(X,z;\omega) = j\rho_0\omega\varphi(X,z;\omega)$ ... (2.2). In this case, $p$ denotes sound pressure, $v$ denotes particle velocity, $\rho_0$ denotes stationary liquid density, $c_0$ denotes propagation velocity relative to the finite-amplitude sound wave, and $\omega$ denotes angular frequency. The velocity potential in the condition of $z \geq z_S$ is spectrally represented using the sound pressure on the surface of $z = z_S$ or the component $z$ of the particle velocity, as shown in

$$\begin{aligned}
\varphi(X, z; \omega) &= \frac{1}{(2\pi)^2} \iint \frac{V_Z(K, z_S; \omega)}{j\Gamma(K; k_0)} \cdot \\
&\quad \cdot \exp\left(-jK \cdot X - j\Gamma(K; k_0)(z - z_S)\right) dK \\
&= \frac{1}{(2\pi)^2} \iint \frac{1}{j\Gamma(K; k_0)} \cdot \frac{P(K, z_S; \omega)}{Z_C(K; k_0)} \cdot \\
&\quad \cdot \exp\left(-jK \cdot X - j\Gamma(K; k_0)(z - z_S)\right) dK
\end{aligned} \quad \text{... (2.3).}$$

In this case,

$$Z_C(\pmb{K};k_0) = \rho_0 c_0 \zeta_C(\pmb{K};k_0) = \rho_0 c_0 \frac{k_0}{\Gamma(\pmb{K};k_0)} \quad \cdots (2.4),$$

$$\Gamma(\pmb{K};k_0) = \begin{cases} \sqrt{k_0^2 - |\pmb{K}|^2} & \left(|\pmb{K}| \le k_0\right) \\ -j\sqrt{|\pmb{K}|^2 - k_0^2} & \left(|\pmb{K}| > k_0\right) \end{cases} \quad \cdots (2.5),$$

and also $k_0 = \omega/c_0$. Therefore, the sound field in the condition of $z \ge z_S$ can be calculated once the sound pressure on the surface of $z=z_S$ or the component $z$ of the particle velocity is found somehow. However, the sound pressure on the surface of $z=z_S$ or the component $z$ of the particle velocity is often hard to directly measure, and in general, a method is adopted in which the sound pressure is observed on the surface of $z=z_H$ that satisfies $z_H \ge z_S$, and the sound pressure on the surface of $z=z_S$ or the component $z$ of the particle velocity is estimated from the data.

In a particular case, as far as the sound field in (semi) infinite space is concerned, the sound field at a certain location is uniquely expressed using the sound field on another plane. The sound pressure in the condition of $\pmb{x}=(\pmb{X},z_H)$ under consideration is expressed as

$$\begin{aligned} p(\pmb{X}, z_H; \omega) &= \frac{1}{(2\pi)^2} \iint \begin{matrix} P(\pmb{K}, z_S; \omega) \cdot \\ \cdot \exp(-j\pmb{K} \cdot \pmb{X} - j\Gamma(\pmb{K};k_0)(z_H - z_S)) \end{matrix} d\pmb{K} \\ &= \frac{1}{(2\pi)^2} \iint \begin{matrix} Z_C(\pmb{K};k_0)V_Z(\pmb{K}, z_S; \omega) \cdot \\ \cdot \exp(-j\pmb{K} \cdot \pmb{X} - j\Gamma(\pmb{K};k_0)(z_H - z_S)) \end{matrix} d\pmb{K} \end{aligned} \quad \cdots (2.6)$$

using the sound pressure on the plane of $z=z_S$ or the component $z$ of the particle velocity. In terms of spectrum, (2.6) represents

$$\begin{aligned} P(\pmb{K}, z_H; \omega) &= P(\pmb{K}, z_S; \omega)\exp(-j\Gamma(\pmb{K};k_0)(z_H - z_S)) \\ &= Z_C(\pmb{K};k_0)V_Z(\pmb{K}, z_S; \omega)\exp(-j\Gamma(\pmb{K};k_0)(z_H - z_S)) \end{aligned} \quad \cdots (2.7).$$

Specifically, as can be seen, the propagation from $z=z_S$ to $z=z_H$ is expressed as

$$H^{(PP)}\left(\boldsymbol{K}, z_H - z_S; k_0\right) = \exp\left(-j\Gamma\left(\boldsymbol{K}; k_0\right)\left(z_H - z_S\right)\right) \ldots \quad (2.8)$$

with a combination of sound pressure/sound pressure and as

$$\begin{aligned}
&H^{(PV)}\left(\boldsymbol{K}, z_H - z_S; k_0\right) \\
&= Z_C\left(\boldsymbol{K}; k_0\right)\exp\left(-j\Gamma\left(\boldsymbol{K}; k_0\right)\left(z_H - z_S\right)\right) \\
&= Z_C\left(\boldsymbol{K}; k_0\right)H^{(PP)}\left(\boldsymbol{K}, z_H - z_S; k_0\right)
\end{aligned} \ldots \quad (2.9)$$

with a combination of particle velocity/sound pressure. In other words, (2.7) can be described as

$$\begin{aligned}
&P\left(\boldsymbol{K}, z_H; \omega\right) \\
&= H^{(PP)}\left(\boldsymbol{K}, z_H - z_S; k_0\right)P\left(\boldsymbol{K}, z_S; \omega\right) \\
&= H^{(PV)}\left(\boldsymbol{K}, z_H - z_S; k_0\right)V_Z\left(\boldsymbol{K}, z_S; \omega\right)
\end{aligned} \ldots \quad (2.10).$$

If an abstract representation using the bra-ket (see, the Documents 1-3) are adopted, the relationship of (2.10) can be described as

$$\begin{aligned}
&\left| P\left(z_H; \omega\right) \right\rangle \\
&= H^{(PP)}\left(z_H - z_S; k_0\right)\left| P\left(z_S; \omega\right) \right\rangle \\
&= H^{(PV)}\left(z_H - z_S; k_0\right)\left| V_Z\left(z_S; \omega\right) \right\rangle
\end{aligned} \ldots \quad (2.11).$$

(2.10) denotes the component when (2.11) is spectrally expanded. As a whole, (2.11) can be described as

$$\left| P\left(z_H; \omega\right) \right\rangle = H^{(\bullet)}\left(z_H - z_S; k_0\right)\left| \chi^{(\bullet)}\left(z_S; \omega\right) \right\rangle \ldots \quad (2.12).$$

The solution of (2.12) is expressed as

$$\left| \chi^{(\bullet)}\left(z_S; \omega\right) \right\rangle = H^{(\bullet)^{-g}}\left(z_H - z_S; k_0\right)\left| P\left(z_H; \omega\right) \right\rangle \ldots \quad (2.13)$$

using generalized inverse operator $H^{(\cdot)-g}(z_H\text{-}z_S;k_0)$ of $H^{(\cdot)}(z_H\text{-}z_S;k_0)$. The generalized inverse operator $H^{(\cdot)-g}(z_H\text{-}z_S;k_0)$ will be expressed based on the conditional least squares method in the following sections.

3. Least Squares Solution (in general)

Assuming that the sound pressure is observed with $z = z_H$, and considering an error from the observed value,

$$\left| E\left(z_H;\omega\right)\right\rangle = \left| P_{Obs}\left(z_H;\omega\right)\right\rangle - H^{(\bullet)}\left(z_H - z_S;k_0\right)\left| \chi^{(\bullet)}\left(z_S;\omega\right)\right\rangle \dots$$

(3.1)

is obtained from (2.12). Thus, the weighted square error is

$$\left\langle E\left|W\right|E\right\rangle$$
$$= \left\{\left\langle P_{Obs}\left(z_H;\omega\right)\right| - \left\langle \chi^{(\bullet)}\left(z_S;\omega\right)\right|H^{(\bullet)\dagger}\left(z_H - z_S;k_0\right)\right\}W \cdot$$
$$\cdot \left\{\left| P_{Obs}\left(z_H;\omega\right)\right\rangle - H^{(\bullet)}\left(z_H - z_S;k_0\right)\left| \chi^{(\bullet)}\left(z_S;\omega\right)\right\rangle\right\} \quad \dots (3.2).$$

In this case, $W$ denotes a positive definite operator that provides weight. The symbol $\dagger$ denotes Hermitian conjugate. The least square solution is a solution of estimating the physical quantity $|\chi^{(\cdot)}(Z_S;\omega)\rangle$ in the condition of $z=z_S$ so as to minimize the error of (3.2). Although a case has been described in which there is no limitation, in the problem near the ill-condition, the solution may be conditional, such as least norm solution or smooth solution, to guarantee the stability of the solution. Therefore, in the inverse problem, the operator $D$ that is $D|\chi^{(\cdot)}(z_S;\omega)\rangle$... (3.3) is often considered, and the solution to minimize the amount

$$J = \left\langle \chi^{(\bullet)}\left(z_S;\omega\right)\right|D^\dagger D\left|\chi^{(\bullet)}\left(z_S;\omega\right)\right\rangle \equiv \left\langle \chi^{(\bullet)}\left(z_S;\omega\right)\right|Q\left|\chi^{(\bullet)}\left(z_S;\omega\right)\right\rangle$$

... (3.4)

is considered. Note that the operator $Q=D^\dagger D$ herein is a non-negative definite operator. In the inverse problem, the solution to minimize the value of (3.4) is considered under the condition where the value of (3.2) is constant. This problem is formulated as an extreme problem of Lagrangian

$$L' = \lambda'\left(\left\langle E\left|W\right|E\right\rangle - E_0\right) + \left\langle \chi^{(\bullet)}\left(z_S;\omega\right)\right|Q\left|\chi^{(\bullet)}\left(z_S;\omega\right)\right\rangle \quad \dots (3.5)$$

or

$$L = \left\langle E \left| W \right| E \right\rangle - E_0 + \lambda \left\langle \chi^{(\bullet)}(z_S;\omega) \left| Q \right| \chi^{(\bullet)}(z_S;\omega) \right\rangle$$

$$= \left\{ P_{Obs}(z_H;\omega) \right| - \left\langle \chi^{(\bullet)}(z_S;\omega) \left| H^{(\bullet)\dagger}(z_H - z_S;k_0) \right\} W \cdot$$

$$\cdot \left\{ \left| P_{Obs}(z_H;\omega) \right\rangle - H^{(\bullet)}(z_H - z_S;k_0) \left| \chi^{(\bullet)}(z_S;\omega) \right\rangle \right\} - E_0 \quad \dots \quad (3.6)$$

$$+ \lambda \left\langle \chi^{(\bullet)}(z_S;\omega) \left| Q \right| \chi^{(\bullet)}(z_S;\omega) \right\rangle$$

, and the least square solution is obtained as a solution of

$$\left( H^{(\bullet)\dagger} W H^{(\bullet)} + \lambda Q \right) \left| \chi^{(\bullet)}(z_S;\omega) \right\rangle = H^{(\bullet)\dagger} W \left| P_{Obs}(z_H;\omega) \right\rangle$$

$$\dots \quad (3.7).$$

Therefore, based on the formulation by the present conditional least squares method, the generalized inverse operator $H^{(\cdot)-g}(z_H\text{-}z_S;k_0)$ of $H^{(\cdot)}(z_H\text{-}z_S;k_0)$ is given by

$$H^{(\bullet)-g} \equiv \left( H^{(\bullet)\dagger} W H^{(\bullet)} + \lambda Q \right)^{-1} H^{(\bullet)\dagger} W \quad \dots \quad (3.8).$$

Incidentally, the Lagrange multiplier herein is determined by $\langle E|W|E\rangle = E_0$ that is a condition where the value obtained by inputting the solution of (3.7) to (3.2) is constant. However, in practice, a constant is often used empirically.

4. Specific Derivation of Integral Equation

A problem will be made clear before specifically solving (3.7). The current problem is assumed to be a problem of finding the physical quantity

$$\chi^{(\bullet)}(X_S, z_S;\omega) = \left\langle X_S \left| \chi^{(\bullet)}(z_S;\omega) \right\rangle \right. \quad \dots \quad (4.2)$$

in the condition of $z = z_S$ after obtaining the sound pressure $P_{Obs}(X_H, z_H;\omega) = \langle X_H| P_{Obs}(z_H;\omega)\rangle \dots_{(4.1)}$ as an observed value, in the condition of $z = z_H$. Therefore, attention is paid to formulas

$$\left\langle X \left| X' \right\rangle = \delta(X - X') \quad \dots \quad (4.3),$$

$$\int \left| X \right\rangle dX \left\langle X \right| = 1 \quad \dots \quad (4.4),$$

$$\langle K | K' \rangle = (2\pi)^2 \delta(K - K') \quad \text{... (4.5)},$$

$$\int |K\rangle \frac{dK}{(2\pi)^2} \langle K| = 1 \quad \text{... (4.6)},$$

$$\langle K | X \rangle = \exp(+jK \cdot X) \quad \text{... (4.7)},$$

$$\langle X | K \rangle = \exp(-jK \cdot X) \quad \text{... (4.8)},$$

$$\langle K | A | K' \rangle = A(K)(2\pi)^2 \delta(K - K') \quad \text{... (4.9)},$$

and

$$\langle X | B | X' \rangle = B(X)\delta(X - X') \quad \text{... (4.10)}$$

related to bra-ket (see, the Documents 1-3). However, in order to avoid complicated integration sign, single integration sign is used in double integration for simplicity. The state represented by (4.9) is considered as spectrally pure, and the state represented by (4.10) is considered as pure in terms of space. Using (4.4), the following formula is first obtained

$$\int \langle X_S | \left( H^{(\cdot)\dagger} W H^{(\cdot)} + \lambda Q \right) X_S' \rangle \langle X_S' | \chi^{(\cdot)}(z_S; \omega) \rangle dX_S'$$

$$= \int \langle X_S | H^{(\cdot)\dagger} W | X_H \rangle \langle X_H | P_{Obs}(z_H; \omega) \rangle dX_H$$

$$\Rightarrow$$

$$\int \{G(X_S \mid X_S') + \lambda Q(X_S \mid X_S')\} \chi^{(\bullet)}(X_S', z_S; \omega) dX_S'$$

$$= \int F^\dagger(X_S \mid X_H) \frac{P_{Obs}(X_H, z_H; \omega)}{\rho_0 c_0} dX_H \qquad \ldots (4.11).$$

Here,

$$G(X_S \mid X_S') = \left\langle X_S \left| H^{(\bullet)^\dagger} W H^{(\bullet)} \right| X_S' \right\rangle \qquad \ldots (4.12),$$

$$Q(X_S \mid X_S') = \left\langle X_S \left| Q \right| X_S' \right\rangle = \left\langle X_S \left| D^\dagger D \right| X_S' \right\rangle \qquad \ldots (4.13),$$

$$F^\dagger(X_S \mid X_H) = \rho_0 c_0 \left\langle X_S \left| H^{(\bullet)^\dagger} W \right| X_H \right\rangle \qquad \ldots (4.14a),$$

and

$$F(X_H \mid X_S) = \rho_0 c_0 \left\langle X_H \left| W H^{(\bullet)} \right| X_S \right\rangle \qquad \ldots (4.14b).$$

(4.11) deals with problem setting such as (4.1) and (4.2), which is obtained by rewriting the abstract representation in (3.7) to a location representation. It can be said that the difference between (3.7) and (4.11) is merely the difference in representation. Considering the characteristics of the operator $H^{(\cdot)\dagger} W H^{(\cdot)}$, $Q=D^\dagger D$ in terms of Hermitian property, positive definition, non-negative definition, and the like, it is possible to rewrite the solutions of the integral equations (3.7) and (4.11) by using Hilbert-Schmidt theorem or Mercer theorem as an expansion type of solution by means of characteristic function of resolvent.

5. Selection of Operator in Pure Form

Here, there will be considered specific forms of the functions defined in the section 4, that are,

$$G(X_S \mid X_S') = \left\langle X_S \left| H^{(\bullet)^\dagger} W H^{(\bullet)} \right| X_S' \right\rangle \quad \ldots((4.12)),$$

$$Q(X_S \mid X'_S) = \langle X_S | Q | X'_S \rangle = \langle X_S | D^\dagger D | X'_S \rangle \quad \text{...((4.13))},$$

and

$$F^\dagger(X_S \mid X_H) = \rho_0 c_0 \langle X_S | H^{(\bullet)\dagger} W | X_H \rangle \qquad \text{...((4.14a))}.$$

When specific forms of these functions are considered, the specific form of (4.12)-(4.14a) is variable depending on the meaning of pureness based on which the abstract operator appearing here is selected, as will be described below.

First, looking at $H^{(\bullet)}$, as shown in (2.8) and (2.9), it is apparent they should be considered as pure. In other words, the spectrum $H^{(\bullet)}(K)$ should be considered. For further discussion, the component $v_z(X_S, z_S; \omega)$ of the particle velocity z in the condition of $z = z_S$ will be considered as an unknown function $\chi^{(\bullet)}(X_S, z_S; \omega)$ herein. In this case,

$$H^{(PV)}(K, z_H - z_S; k_0)$$
$$= Z_C(K; k_0) \exp(-j\Gamma(K; k_0)(z_H - z_S))$$
$$= Z_C(K; k_0) H^{(PP)}(K, z_H - z_S; k_0) \qquad \text{... ((2.9)) of (2.9)}$$

should be used as $H^{(\bullet)}(K)$. Remembering (2.4) and (2.5), that are

$$Z_C(K; k_0) = \rho_0 c_0 \zeta_C(K; k_0) = \rho_0 c_0 \frac{k_0}{\Gamma(K; k_0)} \quad \text{... ((2.4))}$$

and

$$\Gamma(K; k_0) = \begin{cases} \sqrt{k_0^2 - |K|^2} & (|K| \le k_0) \\ -j\sqrt{|K|^2 - k_0^2} & (|K| > k_0) \end{cases} \quad \text{... ((2.5))},$$

it can be understood that $H^{(PV)}(K, z_H - z_S; k_0)$ is a function of $|K| = K$.

Next, the operator $D$ is considered. Remembering that (3.4),

$$J = \langle \chi^{(\bullet)}(z_S; \omega) | D^\dagger D | \chi^{(\bullet)}(z_S; \omega) \rangle \equiv \langle \chi^{(\bullet)}(z_S; \omega) | Q | \chi^{(\bullet)}(z_S; \omega) \rangle$$
$$\cdots ((3.4))$$

is a penalty function with respect to smoothness, normally, a differential operator is adopted as the operator $D$. Although this operator can be considered in actual space, a more convenient representation of $D$ in terms of calculation of value will be

$$\left\langle K \middle| D \middle| K' \right\rangle = \left(2\pi\right)^2 \alpha(K)\left(-jK\right)^\mu \delta(K - K')$$

$$\dots (5.1),$$

which is a spectrally pure representation.

The $\alpha(K)$ substituted for convenience sake is determined by considering convergence properties of integration in spectrum space. At this time,

$$\left\langle K \middle| Q \middle| K' \right\rangle = \left\langle K \middle| D^\dagger D \middle| K' \right\rangle$$

$$= \int \left\langle K \middle| D^\dagger \middle| K'' \right\rangle \frac{dK''}{\left(2\pi\right)^2} \left\langle K'' \middle| D \middle| K' \right\rangle$$

$$= \left(2\pi\right)^2 \left|\alpha(K)\right|^2 \left|K\right|^{2\mu} \delta(K - K') \quad \dots (5.2)$$

$$\equiv \left(2\pi\right)^2 Q(K)\delta(K - K')$$

is obtained.

Lastly, the operator $W$ is considered. This operator is introduced as a weighting operator for weighted square error. However, there is no guiding principle as to in what sense this operator should be pure.

Therefore, as to the operator $W$, there must be considered the following two types of pure states.

$$\left\langle X \middle| W \middle| X' \right\rangle = W(X)\delta(X - X') \quad \dots (5.3)$$

$$\left\langle K \middle| W \middle| K' \right\rangle = \left(2\pi\right)^2 W(K)\delta(K - K') \quad \dots (5.4)$$

Specific formulas of (4.12) and (4.14a) vary in representation depending on either of the above two types is adopted. In the following sections, in a form adapted to (5.3), specific forms of $G\left(X_S \middle| X'_S\right)$ in the formula (4.12) and $F^\dagger(X_S|X_H)$ in the formula (4.13) are provided. As for $Q\left(X_S \middle| X'_S\right)$ in the formula (4.13), it is provided altogether in the end, based on the expansion of $G\left(X_S \middle| X'_S\right)$, $F^\dagger(X_S|X_H)$.

Incidentally, as to the pure state of $W$, the expression for $G\left(X_S \middle| X'_S\right)$ in (4.12) when (5.4) is adopted is provided in Appendix for the purpose of determining the form of (5.2).

6. $G\left(X_S \mid X_S'\right)$, $F^\dagger(X_S|X_H)$ when Adopting Weighting Function Spatially Pure with respect to $W$

In this case, there is provided

$$\langle X|W|X'\rangle = \langle X|B^*W_H B|X'\rangle = |B|^2 W_H(X)\delta(X-X') \quad \text{...(6.1)}.$$

At this point, there are obtained

$$
\begin{aligned}
G(X_S \mid X_S') &= \langle X_S|H^{(\bullet)\dagger}WH^{(\bullet)}|X_S'\rangle \\
&= \iint \langle X_S|H^{(\bullet)\dagger}|X_H\rangle dX_H \langle X_H|W|X_H'\rangle dX_H' \langle X_H'|H^{(\bullet)}|X_S'\rangle \\
&= |B|^2 \int \langle X_S|H^{(\bullet)\dagger}|X_H\rangle dX_H W_H(X_H)\langle X_H|H^{(\bullet)}|X_S'\rangle
\end{aligned}
$$

$$\text{...(6.2)}$$

$$
\begin{aligned}
F^\dagger\left(X_S \mid X_H\right) &= \rho_0 c_0 \langle X_S|H^{(\bullet)\dagger}W|X_H\rangle \\
&= \rho_0 c_0 \int \langle X_S|H^{(\bullet)\dagger}|X_H'\rangle dX_H' \langle X_H'|W|X_H\rangle \\
&= \rho_0 c_0 |B|^2 \langle X_S|H^{(\bullet)\dagger}|X_H\rangle W_H(X_H)
\end{aligned}
$$

$$\text{...(6.3)}.$$

The term remaining in (6.2) and (6.3) is $\langle X_H|H^{(\bullet)}|X_S\rangle$. As described above, $H^{(PV)}(K)$ in (2.9) is adopted as $H^{(\bullet)}(K)$. Therefore, $\langle X_H|H^{(\bullet)}|X_S\rangle$ is

$$
\begin{aligned}
&\langle X_H|H^{(PV)}(z_H - z_S; k_0)|X_S\rangle \\
&= \frac{1}{(2\pi)^2} \int \langle X_H|K\rangle H^{(PV)}(K; z_H - z_S; k_0)\langle K|X_S\rangle dK \\
&= \frac{1}{(2\pi)^2} \int \frac{\rho_0 c_0 \cdot k_0}{\Gamma(K; k_0)} \exp\left(-jK \cdot (X_H - X_S) - j\Gamma(K; k_0)(z_H - z_S)\right) dK
\end{aligned}
$$

$$\text{...(6.4)}.$$

Here, Fourier spectrum representation in three dimensional space of the free space green function, that is, the

main solution of

$$\nabla^2 G_{0,\omega}^{(+)}(x \mid x') + k_0^2 G_{0,\omega}^{(+)}(x \mid x') = -\delta(x - x') \quad \cdots \ (6.5),$$

which is

$$G_{0,\omega}^{(+)}(x \mid x') = \frac{\exp\left(-jk_0|x - x'|\right)}{4\pi|x - x'|} \quad \cdots \ (6.6),$$

is given by

$$G_{0,\omega}^{(+)}(x \mid x') = \frac{1}{(2\pi)^3} \int \frac{1}{k^2 - k_0^2} \exp\left(-jk(x - x')\right) dk$$

$$= \frac{1}{8\pi^2} \int \frac{1}{j\Gamma(K;k_0)} \exp\left(-jK(X - X') - j\Gamma(K;k_0)|z - z'|\right) dK$$

$$\cdots \ (6.7).$$

By using this, (6.4) can be written as

$$\left\langle X_H \left| H^{(PV)}(z_H - z_S; k_0) \right| X_S \right\rangle$$

$$= \frac{\rho_0 c_0 \cdot k_0}{(2\pi)^2} \int \frac{1}{\Gamma(K;k_0)} \exp\left( \begin{array}{c} -jK \cdot (X_H - X_S) \\ -j\Gamma(K;k_0)(z_H - z_S) \end{array} \right) dK$$

$$= j\rho_0 c_0 k_0 \cdot$$

$$\cdot 2 \cdot \frac{1}{8\pi^2} \int \frac{1}{j\Gamma(K;k_0)} \exp\left(-jK \cdot (X_H - X_S) - j\Gamma(K;k_0)(z_H - z_S)\right) dK$$

$$= j\rho_0 c_0 k_0 \cdot \frac{\exp\left(-j|x_H - x_S|\right)}{2\pi|x_H - x_S|}$$

$$\equiv j\rho_0 c_0 k_0 \cdot G_{\omega}^{RB(+)}(x_H \mid x_S)$$

$$\cdots \ (6.8).$$

However, there is provided

$$G_\omega^{RB(\pm)}(x \mid x') = \frac{\exp\left(\mu \, jk_0 \left| x - x' \right|\right)}{2\pi \left| x - x' \right|} \qquad \cdots (6.9).$$

When (6.8) and (6.9) are substituted into (6.3), the form of $G\left(X_S \mid X_S'\right)$, $F^\dagger(X_S \mid X_H)$ is determined. Here, however, $B = 1/(\rho_0 c_0 k_0)$ is selected as not-yet determined $B$. At this point, (6.2) and (6.3) become

$$
\begin{aligned}
G\left(X_S \mid X_S'\right) \\
= |B|^2 \int \left\langle X_S \left| H^{(\bullet)\dagger} \right| X_H \right\rangle dX_H W_H \left(X_H\right)\left\langle X_H \left| H^{(\bullet)} \right| X_S' \right\rangle \qquad \cdots (6.10), \\
= \int G_\omega^{RB(-)}\left(X_H \mid X_S\right) dX_H W_H\left(X_H\right) G_\omega^{RB(+)}\left(X_H \mid X_S'\right)
\end{aligned}
$$

and

$$
\begin{aligned}
F^\dagger\left(X_S \mid X_H\right) \\
= \rho_0 c_0 |B|^2 \left\langle X_S \left| H^{(\bullet)\dagger} \right| X_H \right\rangle W_H\left(X_H\right) \\
= -j \frac{1}{k_0} G_\omega^{RB(-)}\left(X_H \mid X_S\right) W_H\left(X_H\right)
\end{aligned}
\qquad \cdots (6.11).
$$

Incidentally, as a weighting function for measurement coordinates, the form

$$W_H\left(X_H\right) = \sum_{\mu=1}^{M_H} w_{H\mu} \delta\left(X_H - X_{H\mu}\right) \qquad \cdots (6.12)$$

can be considered though it is a special form. At this point, (6.10) and (6.11) become

$$G\left(X_S \mid X_S'\right) = \sum_{\mu=1}^{M_H} G_\omega^{RB(-)}\left(X_{H\mu} \mid X_S\right) w_{H\mu} G_\omega^{RB(+)}\left(X_{H\mu} \mid X_S'\right)$$

$$\cdots (6.13),$$

and

$$F^{\dagger}\left(X_S \mid X_H\right) = -j\frac{1}{k_0}\sum_{\mu=1}^{M_H} G_{\omega}^{RB(-)}\left(X_{H\mu} \mid X_S\right) w_{H\mu}\delta\left(X_H - X_{H\mu}\right)$$

$$\cdots (6.14).$$

7 . Specific Form of $Q\left(X_S \mid X_S'\right) = \left\langle X_S\left|Q\right|X_S'\right\rangle = \left\langle X_S\left|D^{\dagger}D\right|X_S'\right\rangle$

As described above, the form of $G\left(X_S \mid X_S'\right)$, $F^{\dagger}(X_S|X_H)$ among elements required for calculating value is determined. What is remaining is $Q\left(X_S \mid X_S'\right) = \left\langle X_S\left|Q\right|X_S'\right\rangle = \left\langle X_S\left|D^{\dagger}D\right|X_S'\right\rangle$

((4.13)) of (4.13). As described for (5.2),

$$\left\langle K\left|Q\right|K'\right\rangle = \left\langle K\left|D^{\dagger}D\right|K'\right\rangle$$

$$= \int\left\langle K\left|D^{\dagger}\right|K''\right\rangle\frac{dK''}{(2\pi)^2}\left\langle K''\left|D\right|K'\right\rangle$$

$$= (2\pi)^2\left|\alpha(K)\right|^2\left|K\right|^{2\mu}\delta(K - K') \qquad ((5.2)),$$

$$\equiv (2\pi)^2 Q(K)\delta(K - K')$$

as for $Q(K)$, the form $Q(K)=|\alpha(K)^2|K|^{2\mu}$ is considered. However, considering

$$Q\left(X_S \mid X_S'\right) = \left\langle X_S\left|Q\right|X_S'\right\rangle$$

$$= \int\int\left\langle X_S\mid K\right\rangle\frac{dK}{(2\pi)^2}\left\langle K\left|Q\right|K'\right\rangle\frac{dK'}{(2\pi)^2}\left\langle K'\mid X_S'\right\rangle$$

$$(7.1)$$

$$= \int\exp\left(-jK\cdot(X_S - X_S')\right)Q(K)\frac{dK}{(2\pi)^2}$$

based on (4.13), considering that (7.1) should be non-negative real and the integration should be converged, and also considering the formula (B.4) with respect to $G\left(X_S \mid X_S'\right)$ in Appendix, the form suitable as $Q(K)$ will be the

following.

$$Q(\boldsymbol{K}) = D^*(\boldsymbol{K})D(\boldsymbol{K})$$

$$= \frac{1}{2\pi \cdot k_0^{2\mu+2}} K^{2\mu} \left| \frac{\Gamma(\boldsymbol{K}; k_0)}{k_0} \right|^{\nu'} \exp\left(j\left(\Gamma^*(\boldsymbol{K}; k_0) - \Gamma(\boldsymbol{K}; k_0)\right)(z_H - z_S)\right)$$

$$\left(\mu \geq 0, \quad \nu' \geq -1\right)$$

At this point, (7.1) becomes

$$Q(X_S \mid X_S') = \int \langle X_S \mid \boldsymbol{K} \rangle D^*(\boldsymbol{K})D(\boldsymbol{K}) \langle \boldsymbol{K} \mid X_S' \rangle d\boldsymbol{K}$$

$$= \frac{1}{2\pi \cdot k_0^{2\mu+2}} \iint \left\{ \begin{array}{l} K^{2\mu} \left| \dfrac{\Gamma(\boldsymbol{K}; k_0)}{k_0} \right|^{\nu'} \cdot \\[2mm] \cdot \exp\left( \begin{array}{l} -j\boldsymbol{K} \cdot (X_S - X_S') \\ + j\left(\Gamma^*(\boldsymbol{K}; k_0) - \Gamma(\boldsymbol{K}; k_0)\right)(z_H - z_S) \end{array} \right) \end{array} \right\} d\boldsymbol{K}$$

$$= \frac{1}{k_0^{2\mu+2}} \int_0^\infty \left\{ \begin{array}{l} J_0\left(K|X_S - X_S'|\right) \cdot K^{2\mu} \left| \dfrac{\Gamma(\boldsymbol{K}; k_0)}{k_0} \right|^{\nu'} \cdot \\[2mm] \cdot \exp\left( j\left( \begin{array}{l} \Gamma^*(\boldsymbol{K}; k_0) \\ -\Gamma(\boldsymbol{K}; k_0) \end{array} \right)(z_H - z_S) \right) \end{array} \right\} K dK$$

$$= \frac{1}{k_0^{2\mu+2}} \int_0^{k_0} J_0\left(K|X_S - X_S'|\right) \cdot K^{2\mu+1} \frac{\left(k_0^2 - K^2\right)^{\nu'/2}}{k_0^{\nu'}} dK$$

$$+ \frac{1}{k_0^{2\mu+2}} \int_{k_0}^\infty \left\{ \begin{array}{l} J_0\left(K|X_S - X_S'|\right) \cdot \exp\left(-2\left(K^2 - k_0^2\right)^{1/2}(z_H - z_S)\right) \cdot \\[2mm] \cdot K^{2\mu+1} \cdot \dfrac{\left(K^2 - k_0^2\right)^{\nu'/2}}{k_0^{\nu'}} \end{array} \right\} dK$$

$$\cdots (7.3) \, ,$$

where ($\mu{\geq}0$, $\nu'{\geq}{-}1$).

8. Solution of Integral Equation (Numerical Solution)

As described above, all the elements required for calculation value are obtained. As described at the end of the Section 4, it is possible to rewrite the solutions of the integral equations (3.7) and (4.11) by using Hilbert-Schmidt theorem or Mercer theorem as an expansion type of solution by means of characteristic function of resolvent. However, the simplest method of numerically solving the integral equation of (4.11) is to evaluate the integration by discrete approximation and transform (4.11) to obtain the solution of

$$\sum_n \{G(X_{Sm} \mid X_{Sn}) + \lambda Q(X_{Sm} \mid X_{Sn})\} \chi(X_{Sn}, z_S; \omega) |\Delta X_S|$$

$$= \sum_n F^{(a,b)\dagger}(X_{Sm} \mid X_{Hn}) \frac{P_{Obs}(X_{Hn}, z_H; \omega)}{\rho_0 c_0} |\Delta X_H|$$

$$\dots (8.1),$$

which is the simultaneous equations obtained by replacing $\chi^{(\cdot)}(X_S, z_S; \omega)$ with $v_Z(X_{S'}, z_S; \omega)$. In this approximation, a proportionality factor in a form of micro-area ratio or the like is required, and thus, a treatment such as multiplying the obtained solution by a correction factor is needed. If the observation point and the calculation point are discretized at the same density, (8.1) can be expressed as

$$\sum_n \{G(X_{Sm} \mid X_{Sn}) + \lambda Q(X_{Sm} \mid X_{Sn})\} \chi(X_{Sn}, z_S; \omega)$$

$$= \sum_n F^{(a,b)\dagger}(X_{Sm} \mid X_{Hn}) \frac{P_{Obs}(X_{Hn}, z_H; \omega)}{\rho_0 c_0} \qquad \dots (8.2),$$

so that the correction factor is not necessary. However, in this case, $X_{Sm} = X_{Hm}$.
Incidentally, when the weighting function for measurement coordinates is given as

$$W_H(X_H) = \sum_{\mu=1}^{M_H} w_{H\mu} \delta(X_H - X_{H\mu}) \quad \dots ((6.12)),$$

and the $F^\dagger(X_S \mid X_H)$ is given as

$$F^\dagger(X_S \mid X_H) = -j \frac{1}{k_0} \sum_{\mu=1}^{M_H} G_\omega^{RB(-)}(X_{H\mu} \mid X_S) w_{H\mu} \delta(X_H - X_{H\mu})$$

$$\dots ((6.14)),$$

(4.11) is

【数２４７】

$$\int \{G(X_S \mid X_S') + \lambda Q(X_S \mid X_S')\} \chi^{(\bullet)}(X_S', z_S; \omega) dX_S'$$

$$= \int F^{\dagger}(X_S \mid X_H) \frac{P_{Obs}(X_H, z_H; \omega)}{\rho_0 c_0} dX_H$$

$$= -j \frac{1}{k_0} \sum_{\mu=1}^{M_H} G_\omega^{RB(-)}(X_{H\mu} \mid X_S) w_{H\mu} \frac{P_{Obs}(X_{H\mu}, z_H; \omega)}{\rho_0 c_0} \qquad \cdots \quad (8.3).$$

What is obtained by evaluating the integration of the leftmost part by discrete approximation is

$$\sum_{n=1} \{G(X_{Sm} \mid X_{Sn}) + \lambda Q(X_{Sm} \mid X_{Sn})\} \chi^{(\bullet)}(X_{Sn}, z_S; \omega) |\Delta X_S|$$

$$= -j \frac{1}{k_0} \sum_{\mu=1}^{M_H} G_\omega^{RB(-)}(X_{H\mu} \mid X_{Sm}) w_{H\mu} \frac{P_{Obs}(X_{H\mu}, z_H; \omega)}{\rho_0 c_0}$$

$$\cdots \quad (8.4).$$

When the solution of simultaneous equations in (8.4) is considered as the approximation of the original solution, it is necessary to carry out processing such as multiplying the obtained solution by a correction factor.

9. Appendix: Form of $G(X_S \mid X_S')$ for Spectrally Pure $W$

In this case, $\langle K|W|K'\rangle = (2\pi)^2 W(K)\delta(K - K')$... ((5.4)) is selected. And also, as described above, because $H^{(PV)}(K)$ in (2.9) is adopted as $H^{(\bullet)}(K)$, (4.12) becomes

$$G\left(X_S \mid X_S'\right) = \left\langle X_S \left| H^{(\bullet)\dagger} W H^{(\bullet)} \right| X_S' \right\rangle$$

$$= \iint \left\langle X_S \left| H^{(\bullet)\dagger} \right| K \right\rangle \frac{dK}{(2\pi)^2} \left\langle K |W| K' \right\rangle \frac{dK'}{(2\pi)^2} \left\langle K' \left| H^{(\bullet)} \right| X_S' \right\rangle$$

$$= \int \left\langle X_S \left| H^{(\bullet)\dagger} \right| K \right\rangle \frac{dK}{(2\pi)^2} W(K)\left\langle K \left| H^{(\bullet)} \right| X_S' \right\rangle$$

$$= \iiint \begin{matrix} \left\langle X_S \mid K' \right\rangle \dfrac{dK'}{(2\pi)^2} \left\langle K' \left| H^{(\bullet)\dagger} \right| K \right\rangle \dfrac{dK}{(2\pi)^2} W(K) \\[2mm] \left\langle K \left| H^{(\bullet)} \right| K'' \right\rangle \dfrac{dK''}{(2\pi)^2} \left\langle K'' \mid X_S' \right\rangle \end{matrix}$$

$$= \int \left\langle X_S \mid K \right\rangle H^{(\bullet)*}(K) \frac{W(K)}{(2\pi)^2} H^{(\bullet)}(K)\left\langle K \mid X_S' \right\rangle dK$$

$$\cdots (B.1).$$

Further, when

$$H^{(PV)}\left(K, z_H - z_S; k_0\right)$$
$$= Z_C(K; k_0)\exp\left(-j\Gamma(K; k_0)(z_H - z_S)\right)$$
$$= Z_C(K; k_0)H^{(PP)}\left(K, z_H - z_S; k_0\right)$$

$$\cdots ((2.9)) \text{ in } (2.9)$$

is adopted as $H^{(\cdot)}(K)$, (B.1) becomes

$$G\left(X_S \mid X_S'\right) = \int \left\langle X_S \mid K \right\rangle H^{(PV)*}(K) \frac{W(K)}{(2\pi)^2} H^{(PV)}(K)\left\langle K \mid X_S' \right\rangle dK$$

$$= \int \frac{W(K)}{(2\pi)^2} \left| \frac{\rho_0 c_0 k_0}{\Gamma(K; k_0)} \right|^2 \exp\left( \begin{matrix} -jK \cdot (X_S - X_S') \\ -j\left(\Gamma(K; k_0) - \Gamma^*(K; k_0)\right)(z_H - z_S) \end{matrix} \right) dK$$

$$\cdots (B.2).$$

Thus, the spectrum of the weighting function is selected as

$$W(\boldsymbol{K}) = 2\pi \frac{\left|\zeta_C(\boldsymbol{K};k_0)\right|^{-\nu}}{(\rho_0 c_0)^2 k_0^{\ 2}} = \frac{2\pi}{(\rho_0 c_0)^2 k_0^{\ 2}}\left|\frac{\Gamma(\boldsymbol{K};k_0)}{k_0}\right|^{\nu}, \quad (\nu \geq 1)$$

$$\cdots (B.3).$$

At this point, (B.1) becomes

$$G(\boldsymbol{X}_S \mid \boldsymbol{X}_S')$$

$$= \frac{1}{2\pi \cdot k_0^{\ 2}}\iint \exp\left(\begin{array}{c}-j\boldsymbol{K}\cdot(\boldsymbol{X}_S - \boldsymbol{X}_S')\\ +j(\Gamma^*(\boldsymbol{K};k_0)-\Gamma(\boldsymbol{K};k_0))(z_H - z_S)\end{array}\right)\left|\frac{\Gamma(\boldsymbol{K};k_0)}{k_0}\right|^{\nu-2} d\boldsymbol{K}$$

$$= \frac{1}{k_0^{\ 2}}\int_0^\infty \left\{\begin{array}{c}J_0(K|\boldsymbol{X}_S - \boldsymbol{X}_S'|)\cdot \exp(j(\Gamma^*(\boldsymbol{K};k_0)-\Gamma(\boldsymbol{K};k_0))(z_H - z_S))\cdot\\ \cdot\left|\dfrac{\Gamma(\boldsymbol{K};k_0)}{k_0}\right|^{\nu-2}\end{array}\right\}KdK$$

$$= \frac{1}{k_0^{\ 2}}\int_0^{k_0} J_0(K|\boldsymbol{X}_S - \boldsymbol{X}_S'|)\frac{\left(k_0^{\ 2}-K^2\right)^{(\nu-2)/2}}{k_0^{\ \nu-2}}KdK$$

$$+ \frac{1}{k_0^{\ 2}}\int_{k_0}^\infty \left\{\begin{array}{c}J_0(K|\boldsymbol{X}_S - \boldsymbol{X}_S'|)\cdot \exp\left(-2\left(K^2 - k_0^{\ 2}\right)^{1/2}(z_H - z_S)\right)\cdot\\ \cdot\dfrac{\left(K^2 - k_0^{\ 2}\right)^{(\nu-2)/2}}{k_0^{\ \nu-2}}\end{array}\right\}KdK$$

$$\cdots (B.4).$$

However, $\nu \geq 1$.

Next, a second invention according to the present invention will be described.

12. Description of Sound Propagation

Now, a sound source is assumed to be on the surface of $z=z_S$. Using the velocity potential $\varphi(x,y,z;\omega)=\varphi(\boldsymbol{X},z;\omega)$ in the condition of $z \geq z_S$, the sound field in the condition of $z \geq z_S$ is expressed as $v(\boldsymbol{X},z;\omega)=-\nabla\varphi(\boldsymbol{X},z;\omega)$ ... (12.1) and $p(\boldsymbol{X},z;\omega)=j\rho_0\omega\varphi(\boldsymbol{X},z;\omega)$ ... (12.2). In this case, $p$ denotes sound pressure, $v$ denotes particle velocity, $\rho_0$ denotes stationary liquid density, $c_0$ denotes propagation velocity relative to the finite-amplitude sound wave, and $\omega$ denotes angular frequency. The velocity potential in the condition of $z \geq z_S$ is spectrally represented using the sound pressure on the surface of $z=z_S$ or the component $z$ of the particle velocity, as shown in

$$\varphi(X,z;\omega)$$

$$= \frac{1}{(2\pi)^2} \iint \frac{V_Z(K,z_S;\omega)}{j\Gamma(K;k_0)} \cdot$$
$$\cdot \exp(-jK \cdot X - j\Gamma(K;k_0)(z - z_S))dK \quad \dots (12.3).$$

$$= \frac{1}{(2\pi)^2} \iint \frac{1}{j\Gamma(K;k_0)} \cdot \frac{P(K,z_S;\omega)}{Z_C(K;k_0)} \cdot$$
$$\cdot \exp(-jK \cdot X - j\Gamma(K;k_0)(z - z_S))dK$$

In this case,

$$Z_C(K;k_0) = \rho_0 c_0 \zeta_C(K;k_0) = \rho_0 c_0 \frac{k_0}{\Gamma(K;k_0)} \quad \dots (12.4),$$

$$\Gamma(K;k_0) = \begin{cases} \sqrt{k_0^2 - |K|^2} & (|K| \le k_0) \\ -j\sqrt{|K|^2 - k_0^2} & (|K| > k_0) \end{cases} \quad \dots (12.5),$$

and also $k_0 = \omega/c_0$. Therefore, the sound field in the condition of $z \ge z_S$ can be calculated once the sound pressure on the surface of $z = z_S$ or the component Z of the particle velocity is found somehow. However, the sound pressure on the surface of $z = z_S$ or the component $z$ of the particle velocity is often hard to directly measure, and in general, a method is adopted in which the sound pressure is observed on the surface of $z = z_H$ that satisfies $z_H \ge z_S$, and the sound pressure on the surface of $z = z_S$ or the component $z$ of the particle velocity is estimated from the data.

In a particular case, as far as the sound field in (semi) infinite space is concerned, the sound field at a certain location is uniquely expressed using the sound field on another plane. The sound pressure in the condition of $x = (X, z_H)$ under consideration is expressed as

$$p(X,z_H;\omega)$$

$$= \frac{1}{(2\pi)^2} \iint P(K,z_S;\omega) \cdot$$
$$\cdot \exp(-jK \cdot X - j\Gamma(K;k_0)(z_H - z_S))dK \quad \dots (12.6)$$

$$= \frac{1}{(2\pi)^2} \iint Z_C(K;k_0)V_Z(K,z_S;\omega) \cdot$$
$$\cdot \exp(-jK \cdot X - j\Gamma(K;k_0)(z_H - z_S))dK$$

using the sound pressure on the plane of $z = z_S$ or the component $z$ of the particle velocity. In terms of spectrum, (2.6) represents

$$
\begin{aligned}
P\!\left(\boldsymbol{K}, z_H; \omega\right) \\
= P\!\left(\boldsymbol{K}, z_S; \omega\right)\exp\!\left(-j\Gamma\!\left(\boldsymbol{K}; k_0\right)\!\left(z_H - z_S\right)\right) \\
= Z_C\!\left(\boldsymbol{K}; k_0\right)V_z\!\left(\boldsymbol{K}, z_S; \omega\right)\exp\!\left(-j\Gamma\!\left(\boldsymbol{K}; k_0\right)\!\left(z_H - z_S\right)\right)
\end{aligned}
\quad \cdots \ (12.7).
$$

Specifically, as can be seen, the propagation from $z=z_S$ to $z=z_H$ is expressed as

$$
H^{(PP)}\!\left(\boldsymbol{K}, z_H - z_S; k_0\right) = \exp\!\left(-j\Gamma\!\left(\boldsymbol{K}; k_0\right)\!\left(z_H - z_S\right)\right) \quad \cdots \ (12.8)
$$

with a combination of sound pressure/sound pressure and as

$$
\begin{aligned}
H^{(PV)}\!\left(\boldsymbol{K}, z_H - z_S; k_0\right) \\
= Z_C\!\left(\boldsymbol{K}; k_0\right)\exp\!\left(-j\Gamma\!\left(\boldsymbol{K}; k_0\right)\!\left(z_H - z_S\right)\right) \\
= Z_C\!\left(\boldsymbol{K}; k_0\right)H^{(PP)}\!\left(\boldsymbol{K}, z_H - z_S; k_0\right)
\end{aligned}
\quad \cdots \ (12.9)
$$

with a combination of particle velocity/sound pressure. In other words, (2.7) can be described as

$$
\begin{aligned}
P\!\left(\boldsymbol{K}, z_H; \omega\right) \\
= H^{(PP)}\!\left(\boldsymbol{K}, z_H - z_S; k_0\right)P\!\left(\boldsymbol{K}, z_S; \omega\right) \\
= H^{(PV)}\!\left(\boldsymbol{K}, z_H - z_S; k_0\right)V_z\!\left(\boldsymbol{K}, z_S; \omega\right)
\end{aligned}
\quad \cdots \ (12.10).
$$

If an abstract representation using the bra-ket (see, A. Messiah, "Quantum Mechanics 1-3," (see Non-patent Documents 3-5) is adopted, the relationship of (12.10) can be described as

$$
\begin{aligned}
\left| P\!\left(z_H; \omega\right)\right\rangle \\
= H^{(PP)}\!\left(z_H - z_S; k_0\right)\!\left| P\!\left(z_S; \omega\right)\right\rangle \\
= H^{(PV)}\!\left(z_H - z_S; k_0\right)\!\left| V_z\!\left(z_S; \omega\right)\right\rangle
\end{aligned}
\quad \cdots \ (12.11).
$$

(12.10) denotes the component when (12.11) is spectrally expanded. As a whole, (12.11) can be described as

$$\left| P\left(z_H;\omega\right)\right\rangle = H^{(\bullet)}\left(z_H - z_S;k_0\right)\left| \chi^{(\bullet)}\left(z_S;\omega\right)\right\rangle \dots \quad (12.12).$$

Here, (•) is a description in which (*pp*) and (*PV*) are represented.

The solution of (12.12) is expressed as

$$\left| \chi^{(\bullet)}\left(z_S;\omega\right)\right\rangle = H^{(\bullet)-g}\left(z_H - z_S;k_0\right)\left| P\left(z_H;\omega\right)\right\rangle \quad \dots \quad (12.13)$$

using generalized inverse operator $H^{(\cdot)-g}(z_H\text{-}z_S;k_0)$ of $H^{(\cdot)}(z_H\text{-}z_S;k_0)$. The generalized inverse operator $H^{(\cdot)-g}(z_H\text{-}z_S;k_0)$ will be expressed based on the conditional least squares method in the following sections.

13. Least Squares Solution (in general)

Assuming that the sound pressure is observed with $z=z_H$, and considering an error from the observed value,

$$\left| E\left(z_H;\omega\right)\right\rangle = \left| P_{Obs}\left(z_H;\omega\right)\right\rangle - H^{(\bullet)}\left(z_H - z_S;k_0\right)\left| \chi^{(\bullet)}\left(z_S;\omega\right)\right\rangle \dots$$

$$(13.1)$$

is obtained from (12.12). Thus, the weighted square error is

$$\begin{aligned}
&\left\langle E\left|W\right|E\right\rangle \\
&= \left\{ P_{Obs}\left(z_H;\omega\right)\right| - \left\langle \chi^{(\bullet)}\left(z_S;\omega\right)\right| H^{(\bullet)\dagger}\left(z_H - z_S;k_0\right)\right\}W \cdot \\
&\quad \cdot \left\{ P_{Obs}\left(z_H;\omega\right)\right\rangle - H^{(\bullet)}\left(z_H - z_S;k_0\right)\left| \chi^{(\bullet)}\left(z_S;\omega\right)\right\rangle\right\}
\end{aligned} \quad \dots \quad (13.2).$$

In this case, *W* denotes a positive definite operator that provides weight. The symbol † denotes Hermitian conjugate. The least square problem is a problem of estimating the physical quantity $|\chi^{(\cdot)}(z_S;\omega)\rangle$ in the condition of $z=z_S$ so as to minimize the error of (13.2). Although a case has been described in which there is no limitation, in the problem near the ill-condition, the solution may be conditional, such as least norm solution or smooth solution, to guarantee the stability of the solution. Therefore, in the inverse problem, the operator *D* that is $D|\chi^{(\cdot)}(z_S;\omega)\rangle$... (13.3) is often considered, and the solution to minimize the amount

$$J = \left\langle \chi^{(\bullet)}\left(z_S;\omega\right)\right| D^{\dagger}D\left| \chi^{(\bullet)}\left(z_S;\omega\right)\right\rangle \equiv \left\langle \chi^{(\bullet)}\left(z_S;\omega\right)\right| Q\left| \chi^{(\bullet)}\left(z_S;\omega\right)\right\rangle$$

$$\dots \quad (13.4)$$

is considered. Note that the operator $Q=D^{\dagger}D$ herein is a non-negative definite operator. In the inverse problem, the solution to minimize the value of (13.4) is considered under the condition where the value of (13.2) is constant. This problem is formulated as an extreme problem of Lagrangian

$$L' = \lambda'\left(\langle E|W|E\rangle - E_0\right) + \left\langle \chi^{(\bullet)}(z_S;\omega)\Big|Q\Big|\chi^{(\bullet)}(z_S;\omega)\right\rangle \quad \text{...(13.5)}$$

or

$$L = \langle E|W|E\rangle - E_0 + \lambda\left\langle \chi^{(\bullet)}(z_S;\omega)\Big|Q\Big|\chi^{(\bullet)}(z_S;\omega)\right\rangle$$

$$= \left\{\Big\langle P_{Obs}(z_H;\omega)\Big| - \left\langle \chi^{(\bullet)}(z_S;\omega)\Big|H^{(\bullet)\dagger}(z_H - z_S;k_0)\right\}W \cdot$$

$$\cdot \left\{\Big|P_{Obs}(z_H;\omega)\Big\rangle - H^{(\bullet)}(z_H - z_S;k_0)\Big|\chi^{(\bullet)}(z_S;\omega)\Big\rangle\right\} - E_0$$

$$+ \lambda\left\langle \chi^{(\bullet)}(z_S;\omega)\Big|Q\Big|\chi^{(\bullet)}(z_S;\omega)\right\rangle$$

$$\text{... (13.6)}$$

, and the least square solution is obtained as

$$\left|\chi^{(\bullet)}(z_S;\omega)\right\rangle = \left(H^{(\bullet)\dagger}WH^{(\bullet)} + \lambda Q\right)^{-1} H^{(\bullet)\dagger}W\Big|P_{Obs}(z_H;\omega)\Big\rangle$$

$$\equiv H^{(\bullet)-g}\Big|P_{Obs}(z_H;\omega)\Big\rangle \tag{13.8}$$

that is the solution of

$$\left(H^{(\bullet)\dagger}WH^{(\bullet)} + \lambda Q\right)\Big|\chi^{(\bullet)}(z_S;\omega)\Big\rangle = H^{(\bullet)\dagger}W\Big|P_{Obs}(z_H;\omega)\Big\rangle \tag{13.7}$$

formulated by differentiating (13.6) with $\langle \chi^{(\cdot)}(z_S;\omega)|$ and taking it as zero. The Lagrange multiplier herein is determined by $\langle E|W|E\rangle = E_0$ that is a condition where the value obtained by inputting the solution (13.8) of (13.7) to (13.2) is constant. However, in practice, a constant is often used empirically.

14. Specific Derivation of Integral Equation

A problem will be made clear before specifically solving (13.7). The current problem is assumed to be a problem of finding the physical quantity $\chi^{(\cdot)}(X_S,z_S;\omega) = \langle X_S|\chi^{(\cdot)}(z_S;\omega)\rangle$... (14.2) in the condition of $Z=Z_S$ after obtaining the sound pressure $P_{Obs}(X_H,z_H;\omega) = \langle X_H|P_{Obs}(z_H;\omega)\rangle$...(14.1) as an observed value, in the condition of $Z=Z_H$. Therefore, attention is paid to formulas $\langle X|X'\rangle = \delta(X-X')$... (14.3),

$$\int |X\rangle dX \langle X| = \mathbf{1} \text{... (14.4)},$$

$$\langle K | K' \rangle = (2\pi)^2 \delta(K - K') \quad \dots \quad (14.5),$$

$$\int | K \rangle \frac{dK}{(2\pi)^2} \langle K | = 1 \quad \dots \quad (14.6),$$

$$\langle K | X \rangle = \exp(+jK \cdot X) \quad \dots \quad (14.7),$$

$$\langle X | K \rangle = \exp(-jK \cdot X) \quad \dots \quad (14.8),$$

and

$$\langle K | H^{(\bullet)}(z_H - z_S; k_0) | K' \rangle = H^{(\bullet)}(K; z_H - z_S; k_0)(2\pi)^2 \delta(K - K')$$

$$\dots \quad (14.9)$$

related to bra-ket (see, Non-patent Documents 3-5). Using the formulas to transform (13.7), the following formula is first obtained

$$\int \langle X_S | \left( H^{(\bullet)\dagger} W H^{(\bullet)} + \lambda Q \right) X_S' \rangle \langle X_S' | \chi^{(\bullet)}(z_S;\omega) \rangle dX_S'$$

$$= \int \langle X_S | H^{(\bullet)\dagger} W | X_H \rangle \langle X_H | P_{Obs}(z_H;\omega) \rangle dX_H$$

$$\Rightarrow$$

$$\iiint \frac{\langle X_S | K \rangle \frac{dK}{(2\pi)^2} \langle K | \left( H^{(\bullet)\dagger} W H^{(\bullet)} + \lambda Q \right) K' \rangle \cdot}{\cdot \frac{dK'}{(2\pi)^2} \langle K' | X_S' \rangle \langle X_S' | \chi^{(\bullet)}(z_S;\omega) \rangle dX_S'}$$

$$= \iiint \frac{\langle X_S | K \rangle \frac{dK}{(2\pi)^2} \langle K | H^{(\bullet)\dagger} W | K' \rangle \cdot}{\cdot \frac{dK'}{(2\pi)^2} \langle K' | X_H \rangle \langle X_H | P_{Obs}(z_H;\omega) \rangle dX_H} \qquad \dots (14.10).$$

Formula (14.10) can be further rewritten as

$$\iint \langle X_S | K \rangle \begin{pmatrix} H^{(\bullet)*}(K) W(K) H^{(\bullet)}(K) \\ + \lambda D^*(K) D(K) \end{pmatrix} \langle K | X_S' \rangle dK \langle X_S' | \chi^{(\bullet)}(z_S;\omega) \rangle dX_S'$$

$$= \iint \langle X_S | K \rangle H^{(\bullet)*}(K) W(K) \langle K | X_H \rangle dK \langle X_H | P_{Obs}(z_H;\omega) \rangle dX_H$$

$$\Rightarrow$$

$$\int \{ G(X_S | X_S') + \lambda Q(X_S | X_S') \} \chi^{(\bullet)}(X_S', z_S;\omega) dX_S'$$

$$= \int F^\dagger(X_S | X_H) \frac{P_{Obs}(X_H, z_H;\omega)}{\rho_0 c_0} dX_H$$

$$\dots (14.11)((13.7)).$$

Formula (14.11) is a first-kind Fredholm integral equation related to an unknown function $\chi^{(\cdot)}(X_S, z_S; \omega)$. Although the integral kernel and the like in (14.11) are given by

$$G(X_S \mid X_S') = \int \langle X_S \mid K \rangle H^{(\bullet)^*}(K) W(K) H^{(\bullet)}(K) \langle K \mid X_S' \rangle dK$$

$$\cdots \ (14.12),$$

$$Q(X_S \mid X_S') = \int \langle X_S \mid K \rangle D^*(K) D(K) \langle K \mid X_S' \rangle dK \quad \cdots \ (14.13),$$

$$F^{\dagger}(X_S \mid X_H) = \rho_0 c_0 \int \langle X_S \mid K \rangle H^{(\bullet)^*}(K) W(K) \langle K \mid X_H \rangle dK$$

$$\cdots \ (14.14a),$$

and

$$F(X_H \mid X_S) = \rho_0 c_0 \int \langle X_H \mid K \rangle W(K) H^{(\bullet)}(K) \langle K \mid X_S \rangle dK$$

$$\cdots \ (14.14b),$$

the specific form is variable depending on what is selected as an unknown function $\chi^{(\cdot)}(X_S, z_S; \omega)$, or what is adopted as $W(K)$. This will be described later. What is important is that if (14.7) and (a4.8), $\langle K|X \rangle = \exp(+jK \cdot X) \ \cdots \ ((14.7))$, and $\langle X|K \rangle = \exp(-jK \cdot X) \ \cdots \ ((14.8))$ are used, then

$$G^{eff}(X_S \mid X_S') \equiv G(X_S \mid X_S') + \lambda Q(X_S \mid X_S')$$

$$= \int \langle X_S \mid K \rangle W(K) \{ H^{(\bullet)^*}(K) H^{(\bullet)}(K) + \lambda D^*(K) D(K) \} \langle K \mid X_S' \rangle dK$$

$$= \int \exp(-jK \cdot (X_S - X_S')) \{ H^{(\bullet)^*}(K) W(K) H^{(\bullet)}(K) + \lambda D^*(K) D(K) \} dK$$

$$\cdots \ (14.15),$$

therefore, if

$$\{ H^{(\bullet)^*}(K) W(K) H^{(\bullet)}(K) + \lambda D^*(K) D(K) \} = \beta(|K|) \equiv \beta(K)$$

$$\cdots \ (14.6),$$

then

$$G^{eff}(X_S \mid X_S') = 2\pi \int_0^\infty J_0(K|X_S - X_S'|)\beta(K)KdK = G^{eff}(X_S' \mid X_S)$$

$$\ldots (14.7),$$

and therefore, (14.11) is an integral equation with symmetric kernel. In this case, the Hilbert-Schmidt theorem can be used. As shown under (13.4), because $Q = D\dagger D$, if
$\lambda > 0$, $W(K) = W(K) > 0$ is selected, the integral kernel of (14.11) is a positive definite. Therefore, it should be noted that the Mercer theorem can also be used.

15. Solution of Integral Equation (Numerical Solution)

The simplest method of numerically solving the integral equation of (14.11) is to evaluate the integration by discrete approximation and transform (14.11) as

$$\sum_n \{G(X_{Sm} \mid X_{Sn}) + \lambda Q(X_{Sm} \mid X_{Sn})\}\chi(X_{Sn}, z_S; \omega)|\Delta X_S|$$

$$= \sum_n F^{(a,b)\dagger}(X_{Sm} \mid X_{Hn})\frac{P_{Obs}(X_{Hn}, z_H; \omega)}{\rho_0 c_0}|\Delta X_H|$$

$$\ldots (15.1)$$

to obtain the solution of the simultaneous equations to thereby find the approximate solution. In the approximation, a proportionality factor in a form of micro-area ratio or the like is required, and thus, a treatment such as multiplying the obtained solution by a correction factor is needed. If the observation point and the calculation point are discretized at the same density, (15.1) can be expressed as

$$\sum_n \{G(X_{Sm} \mid X_{Sn}) + \lambda Q(X_{Sm} \mid X_{Sn})\}\chi(X_{Sn}, z_S; \omega)$$

$$= \sum_n F^{(a,b)\dagger}(X_{Sm} \mid X_{Hn})\frac{P_{Obs}(X_{Hn}, z_H; \omega)}{\rho_0 c_0} \qquad \ldots (15.2),$$

so that the correction factor is not necessary. However, in this case, $X_{Sm} = X_{Hm}$.
Only the numerical solution is taken into consideration herein, and the solution of the integral equation will not be described.

6. Specific Form of Integral Kernel and the like

A specific form of the functions

$$G(X_S \mid X_S') = \int \langle X_S \mid K \rangle H^{(\bullet)^*}(K) W(K) H^{(\bullet)}(K) \langle K \mid X_S' \rangle dK$$

$$\dots ((14.12)),$$

$$Q(X_S \mid X_S') = \int \langle X_S \mid K \rangle D^*(K) D(K) \langle K \mid X_S' \rangle dK \dots$$

$$((14.13)),$$

and

$$F^\dagger(X_S \mid X_H) = \rho_0 c_0 \int \langle X_S \mid K \rangle H^{(\bullet)^*}(K) W(K) \langle K \mid X_H \rangle dK$$

$$\dots ((14.14a))$$

defined in section 4 will be provided herein. The component $v_z(X_S,z_S;\omega)$ of the particle velocity Z in the condition of $z = z_S$ will be considered as an unknown function $X^{(\bullet)}(X_S,z_S;\omega)$ herein. In this case,

$$H^{(PV)}(K, z_H - z_S; k_0)$$
$$= Z_C(K; k_0) \exp(-j\Gamma(K; k_0)(z_H - z_S))$$
$$= Z_C(K; k_0) H^{(PP)}(K, z_H - z_S; k_0) \qquad \dots ((12.9))$$

of (12.9) should be used as $H^{(\bullet)}(K)$. Remembering (12.4) and (12.5),

$$Z_C(K; k_0) = \rho_0 c_0 \zeta_C(K; k_0) = \rho_0 c_0 \frac{k_0}{\Gamma(K; k_0)} \quad \dots (12.4)$$

and

$$\Gamma(K; k_0) = \begin{cases} \sqrt{k_0^2 - |K|^2} & (|K| \le k_0) \\ -j\sqrt{|K|^2 - k_0^2} & (|K| > k_0) \end{cases} \quad \dots ((12.5)),$$

it can be understood that $H^{(PV)}(K,z_H\text{-}z_S;k_0)$ is a function of $|K|=K$. Considering the forms of (12.4), (12.9), and (14.12), it can be understood that

$$W(\boldsymbol{K}) = \frac{\left|\zeta_C(\boldsymbol{K};k_0)\right|^{-\nu}}{2\pi(\rho_0 c_0)^2 k_0{}^2} = \frac{1}{2\pi(\rho_0 c_0)^2 k_0{}^2}\left|\frac{\Gamma(\boldsymbol{K};k_0)}{k_0}\right|^{\nu}, \quad (\nu \geq 1)$$

should be adopted as a function $W(\boldsymbol{K}) = W(K) > 0$ suitable for the numerical integration. The adoption leads to the convergence of the integration. The constant $1/(2\pi(\rho_0 c_0)^2 k_0{}^2)$ is provided for convenience to make the integration dimensionless. In this case,

$$G(X_S \mid X_S') = \int \langle X_S \mid \boldsymbol{K}\rangle H^{(\bullet)^*}(\boldsymbol{K}) W(\boldsymbol{K}) H^{(\bullet)}(\boldsymbol{K})\langle \boldsymbol{K} \mid X_S'\rangle d\boldsymbol{K}$$

$$= \frac{1}{2\pi \cdot k_0{}^2} \iint \exp\left(\begin{array}{c} -j\boldsymbol{K}\cdot(X_S - X_S') \\ + j(\Gamma^*(\boldsymbol{K};k_0) - \Gamma(\boldsymbol{K};k_0))(z_H - z_S) \end{array}\right)\left|\frac{\Gamma(\boldsymbol{K};k_0)}{k_0}\right|^{\nu-2} d\boldsymbol{K}$$

$$= \frac{1}{k_0{}^2} \int_0^\infty \frac{J_0(K\mid X_S - X_S'\mid)\cdot \exp(j(\Gamma^*(\boldsymbol{K};k_0) - \Gamma(\boldsymbol{K};k_0))(z_H - z_S))\cdot}{\left|\frac{\Gamma(\boldsymbol{K};k_0)}{k_0}\right|^{\nu-2}} K dK$$

$$= \frac{1}{k_0{}^2} \int_0^{k_0} J_0(K\mid X_S - X_S'\mid)\frac{\left(k_0{}^2 - K^2\right)^{(\nu-2)/2}}{k_0{}^{\nu-2}} K dK$$

$$+ \frac{1}{k_0{}^2} \int_{k_0}^\infty \frac{J_0(K\mid X_S - X_S'\mid)\cdot \exp\left(-2(K^2 - k_0{}^2)^{1/2}(z_H - z_S)\right)\cdot}{k_0{}^{\nu-2}}\left(K^2 - k_0{}^2\right)^{(\nu-2)/2} K dK$$

$$\cdots (16.2)$$

and

$$F^{\dagger}\left(X_S \mid X_H\right) = \rho_0 c_0 \int \langle X_S \mid K \rangle H^{(\bullet)^*}(K) W(K) \langle K \mid X_H \rangle dK$$

$$= \frac{1}{2\pi \cdot k_0^{\ 2}} \iint \left| \frac{\Gamma(K;k_0)}{k_0} \right|^{\nu} \frac{k_0}{\Gamma^*(K;k_0)} \exp\left( \begin{array}{c} -jK \cdot (X_S - X_H) \\ + j\Gamma^*(K;k_0)(z_H - z_S) \end{array} \right) dK$$

$$J_0(K|X_S - X_H|)\exp(j\Gamma^*(K;k_0)(z_H - z_S)).$$

$$= \frac{1}{k_0^{\ 2}} \int_0^\infty \cdot \left| \frac{\Gamma(K;k_0)}{k_0} \right|^{\nu} \frac{k_0}{\Gamma^*(K;k_0)} K dK$$

$$= \frac{1}{k_0^{\ 2}} \int_0^{k_0} J_0(K|X_S - X_H|) \cdot \frac{\left(k_0^{\ 2} - K^2\right)^{(\nu-1)/2}}{k_0^{\ \nu-1}} \cdot$$
$$\cdot \exp(j\Gamma(K;k_0)(z_H - z_S)) K dK$$

$$-j \frac{1}{k_0^{\ 2}} \int_{k_0}^\infty J_0(K|X_S - X_H|) \cdot \frac{\left(K^2 - k_0^{\ 2}\right)^{(\nu-1)/2}}{k_0^{\ \nu-1}} \cdot$$
$$\cdot \exp\left(-\left(K^2 - k_0^{\ 2}\right)^{1/2}(z_H - z_S)\right) K dK$$

$$\dots (16.3)$$

are obtained. As for the calculation of remaining $Q\left(X_S \mid X_S'\right)$, considering that the form of the operator $D$ is arbitrary, it can be seen that $D^*(K)D(K)$ can be arbitrarily selected as long as the positivity is taken into account.

$$D^*(K)D(K)$$

$$= \frac{1}{2\pi \cdot k_0^{\ 2\mu+2}} K^{2\mu} \left| \frac{\Gamma(K;k_0)}{k_0} \right|^{\nu'} \exp\left(j\left(\Gamma^*(K;k_0) - \Gamma(K;k_0)\right)(z_H - z_S)\right)$$

$$\left(\mu \geq 0, \quad \nu' \geq -1\right)$$

$$\dots (16.4)$$

is assumed to be selected herein, in consideration of the convergence of the infinite integral. In this case,

$$Q(X_S \mid X_S') = \int \langle X_S \mid K \rangle D^*(K) D(K) \langle K \mid X_S' \rangle dK$$

$$= \frac{1}{2\pi \cdot k_0^{2\mu+2}} \iint K^{2\mu} \left| \frac{\Gamma(K;k_0)}{k_0} \right|^{\nu'} \cdot \exp\left( \begin{array}{c} -jK \cdot (X_S - X_S') \\ + j(\Gamma^*(K;k_0) - \Gamma(K;k_0))(z_H - z_S) \end{array} \right) dK$$

$$= \frac{1}{k_0^{2\mu+2}} \int_0^\infty J_0(K|X_S - X_S'|) \cdot K^{2\mu} \left| \frac{\Gamma(K;k_0)}{k_0} \right|^{\nu'} \cdot \exp\left( j \left( \begin{array}{c} \Gamma^*(K;k_0) \\ -\Gamma(K;k_0) \end{array} \right) (z_H - z_S) \right) K dK$$

$$= \frac{1}{k_0^{2\mu+2}} \int_0^{k_0} J_0(K|X_S - X_S'|) \cdot K^{2\mu+1} \frac{(k_0^2 - K^2)^{\nu'/2}}{k_0^{\nu'}} dK$$

$$+ \frac{1}{k_0^{2\mu+2}} \int_{k_0}^\infty J_0(K|X_S - X_S'|) \cdot \exp\left( -2(K^2 - k_0^2)^{1/2}(z_H - z_S) \right) \cdot K^{2\mu+1} \cdot \frac{(K^2 - k_0^2)^{\nu'/2}}{k_0^{\nu'}} dK$$

$$\ldots (16.5)$$

is obtained. However, ($\mu \geq 0$, $\nu' \geq -1$).

In the actual inverse problem solution, the forgoing formulas are numerically integrated to find the coefficient matrix to thereby solve the simultaneous equations.

This completes the description of the solution when treating the near-field acoustical holography, which is theoretical basis of the present invention, as an inverse problem. Embodiments of the present invention will now be described below.

First, embodiments of the first invention will be described.

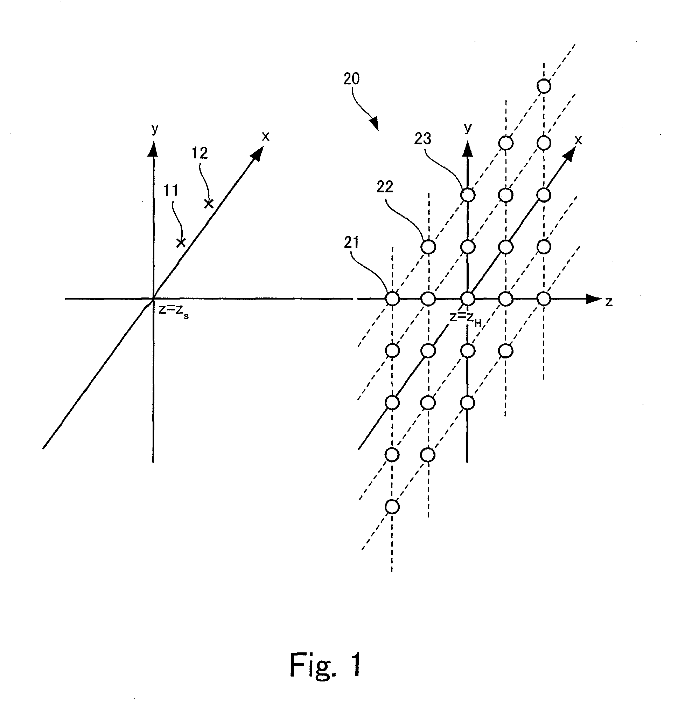

Fig. 1 depicts a layout of sound sources and a microphone array.

Two point sound sources 11 and 12 are aligned at neighboring locations on the x-y plane of $z=z_S$. A microphone array 20 is provided that is consisted of a multiplicity of microphones 21, 22, 23, ... arranged at a multiplicity of points on the x-y plane of $z = z_H$, the microphones two-dimensionally dispersed at a predetermined pitch.

Signals obtained by the microphone array 20 picking up sounds from the sound sources 11 and 12 are analyzed, and the locations of the sound sources 11 and 12 are specified.

Although the microphone array 20 is provided in this example, instead of the microphone array 20, one or multiple microphones may pick up sounds from the sound sources 11 and 12 while moving in the path that passes through the multiplicity of points.

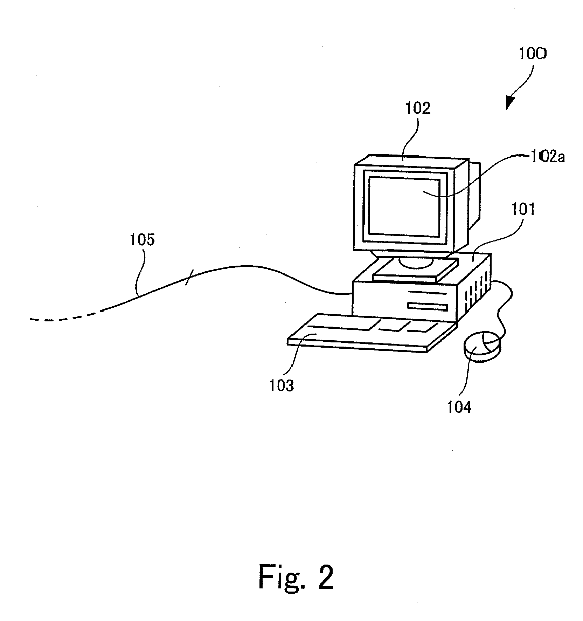

Fig. 2 is an external perspective view of a sound source search computer operating as an embodiment of a sound source search device of the present invention. The sound source search device as an embodiment of the present invention is realized by a combination of hardware of the sound source search computer 100 and software executed in the sound source search computer 100.

The sound source search computer 100 includes a main body 101 containing a CPU, a RAM, a magnetic disk, a communication board, and the like, a display 102 that displays on a display screen 102a in accordance with an instruction from the main body 101, a keyboard 103 for inputting an instruction of the operator or textual information in the sound source search computer 100, and a mouse 104 for designating an arbitrary location on the display screen 102a to input an instruction in accordance with an icon or the like displayed at the location.

The main body 101 also contains a CD-ROM drive for driving a CD-ROM 105 (see, Fig. 2) that can be freely removed.

The CD-ROM 105 is an embodiment of a sound source search program storage medium according to the present invention and stores a sound source search program. The CD-ROM 105 is mounted on the main body 101. The CD-ROM drive installs the sound source search program stored in the CD-ROM 105 into the magnetic disk of the sound source search computer 100. Once the sound source search program installed in the magnetic disk of the sound source search computer 100 is launched, the sound source search computer 100 operates as an embodiment of the sound source search device of the present invention.

In the present embodiment, a multiplicity of microphones 21, 22, 23, ... constituting the microphone array 20 shown in Fig. 1 are connected to the sound source search computer 100 through a signal line 105.

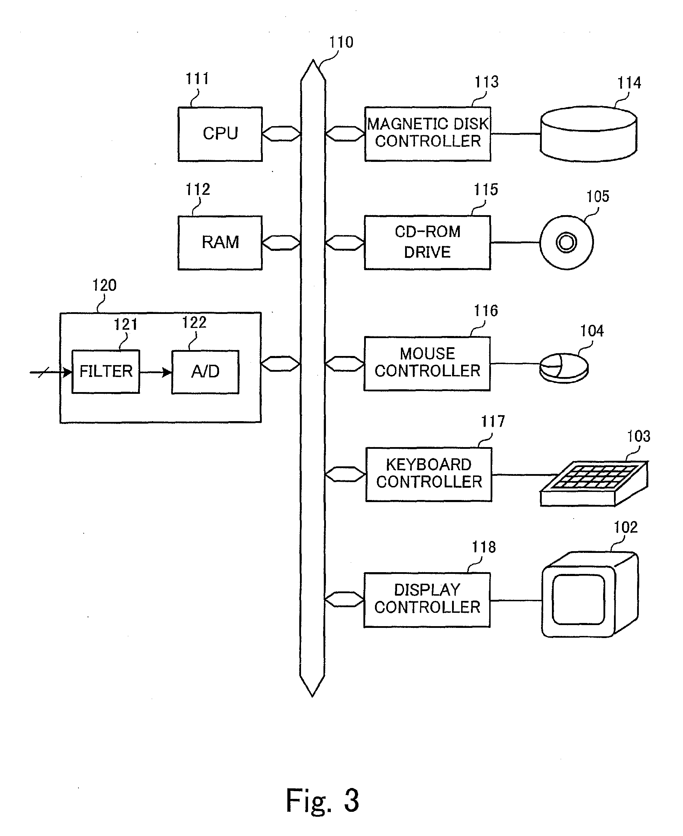

Fig. 3 is a hardware block diagram of the sound source search computer 100 shown in Fig. 2.

The hardware block diagram depicts a central processing unit (CPU) 111, a RAM 112, a magnetic disk controller 113, a CD-ROM drive 115, a mouse controller 116, a keyboard controller 117, a display controller 118, and an A/D conversion board 120, which are interconnected through a bus 110.

A filter 121 and an A/D converter 122 are mounted on the A/D conversion board 120, and the A/D conversion board 120 is loaded on the main body 101 of the sound source search computer 100 shown in Fig. 1.

The A/D converter 122 on the A/D conversion board 120 samples analog received sound signals obtained by picking up sounds with microphones 21, 22, 23, ... constituting the microphone array 20 at predetermined sampling intervals and generates digital time series data. The filter 121 mounted on the A/D conversion board 120 is a low-pass anti-aliasing filter for preventing mixing of aliasing noise (folded noise) with the digital time series data obtained by the A/D converter 122.

As described with reference to Fig. 2, the CD-ROM drive 115 contains the CD-ROM 105 and accesses the mounted CD-ROM 105.

Fig. 3 also depicts the magnetic disk 114 accessed by the magnetic disk controller 113, the mouse 104 controlled by the mouse controller 116, the keyboard 103 controlled by the keyboard controller 117, and the display 102 controlled by the display controller 118.

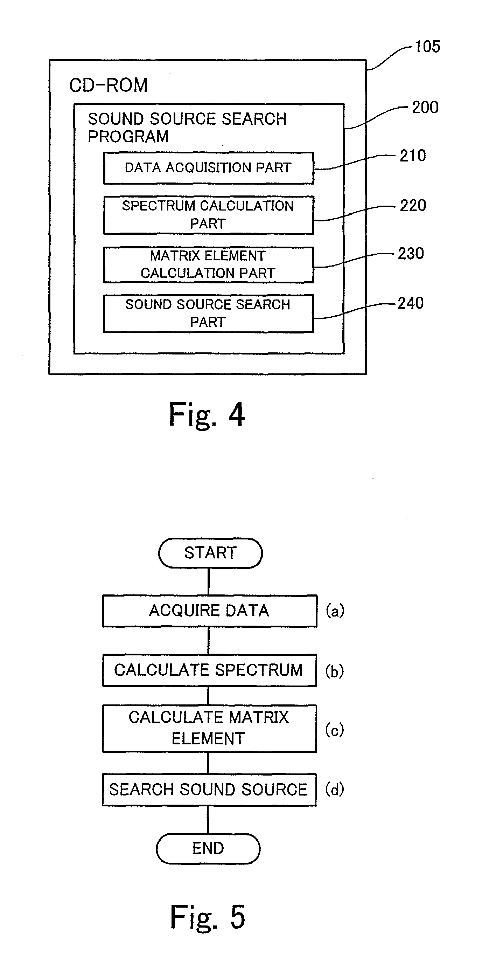

Fig. 4 depicts a configuration of a sound source search program storage medium as an embodiment of the present invention.

The sound source search program 200 is stored in the CD-ROM 105. The sound source search program 200 is constituted by a data acquisition part 210, a spectrum calculation part 220, a matrix element calculation part 230, and a sound source search part 240.

The operations of the components constituting the sound source search program 200 will be described later.

Fig. 5 is a flow chart of a configuration of a sound source search method as an embodiment of the present invention.

The sound source search method is constituted by a data acquisition step (step a), a spectrum calculation step (step b), a matrix element calculation step (step c), and a sound source search step (step d).

In the present embodiment, the sound source search program 200 shown in Fig. 4 is installed and executed in the sound source search computer 100 shown in Figs. 2 and 3, and the sound source search program 200 implements the sound source search method shown in Fig. 5.

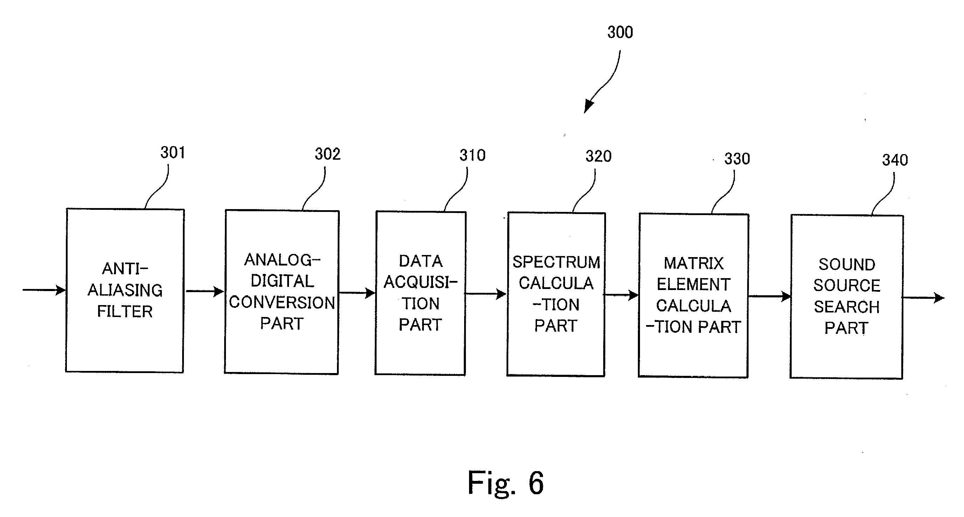

The operations of the steps of the sound source search method will be described below in the description of a sound source search device shown in Fig. 6, together with the description of the operations of the components of the sound source search program 200 of Fig. 4.

Fig. 6 is a functional block diagram of an embodiment of the sound source search device of the present invention realized by the sound source search program 200 shown in Fig. 4 being installed and executed in the sound source search computer 100 shown in Figs. 2 and 3.

The sound source search device 300 shown in Fig. 6 is constituted by an anti-aliasing filter 301, an analog-digital conversion part 302, a data acquisition part 310, a spectrum calculation part 320, a matrix element calculation part 330, and a sound source search part 340.

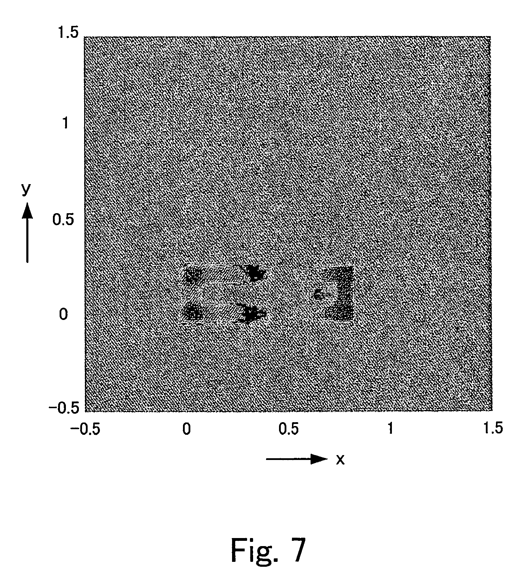

The anti-aliasing filter 301 and the analog-digital conversion part 302 are equivalent to the filter 121 on the A/D conversion board 120 and the A/D converter 122 shown in Fig. 3. The rest of the components, the data acquisition part 310, the spectrum calculation part 320, the matrix element calculation part 330, and the sound source search part 340 are functions realized by the sound source search program 200 within the sound source search computer 100, the sound source search program 200 executed by the CPU 111 of the sound source search computer 100 (see, Figs. 1 and 2). In relation to the sound source search program 200 shown in Fig. 4 and the sound source search method shown in Fig. 5, the data acquisition part 310 of the sound source search device 300 of Fig. 6 corresponds to the data acquisition part 210 of the sound source search program 200 of Fig. 4 and the data acquisition step (step a) of the sound source search method of Fig. 5, the spectrum calculation part 320 of the sound source search device 300 of Fig. 6 corresponds to the spectrum calculation part 220 of the sound source search program 200 of Fig. 4 and the spectrum calculation step (step b) of the sound source search method of Fig. 5, the matrix element calculation part 330 of the sound source search device 300 of Fig. 7 corresponds to the matrix element calculation part 230 of the sound source search program 200 of Fig. 4 and the matrix element calculation step (step c) of the sound source search method of Fig. 5, and the sound source search part 340 of the sound source search device 300 of Fig. 6 corresponds to the sound source search part 240 of the sound source search program 200 of Fig. 4 and the sound source search step (step d) of the sound source search method of Fig. 5. However, the data acquisition part 310, the spectrum calculation part 320, the matrix element calculation part 330, and the sound source search part 340 of the sound source search device 300 of Fig. 6 are formed of a combination of hardware and software, while the corresponding elements of the sound source search program 200 of Fig. 4 are formed only of an application program. In the present embodiment, the sound source search program of Fig. 4 is installed in the sound source search computer 100 shown in Figs. 2 and 3 and executed in the sound source search computer 100, and the sound source search method of Fig. 5 is implemented in the sound source search computer 100.

The following description of the operations of the components of the sound source search device 300 of Fig. 6 also serves as the description of the sound source search program 200 of Fig. 4 and the sound source search method of Fig. 5.

The data acquisition part 310 of the sound source search device of Fig. 6 assumes a role to control the A/D conversion board 120 shown in Fig. 3 and to import the digital time series data into the sound source search program 200 of Fig. 4, the data acquired by filtering and A/D conversion in the A/D conversion board 120. On hardware, the CPU 111 or the like that executes the data acquisition part 210 constituting the sound source search program 200 of Fig. 4 is equivalent to the data acquisition part 310.

As described, the data acquisition part 310 acquires time series data of a multiplicity of channels corresponding to the received sound signals of a multiplicity of channels generated by a multiplicity of microphones 21, 22, 23, ... constituting the microphone array 20 shown in Fig. 1.

The spectrum calculation part 320 then uses FFT (Fast Fourier Transform) or the like, subjecting the time series data of the channels to the discrete Fourier transform. In this case, it is preferable to take a measure to obtain a spectrum of a desired angular frequency $\omega$ with sufficiently high accuracy. To obtain the spectrum of the desired angular frequency $\omega$ with sufficiently high accuracy, although a measure can be taken such as to make the sampling time intervals in the analog-digital conversion part 302 small enough, it is preferable to use algorithms proposed in Patent Document 1 described above. However, the present embodiment does not intend to elicit the method to obtain the highly accurate spectrum of the desired angular frequency $\omega$, and thus, detailed description in regard to that will not be further stated.

In the following matrix element calculation part 330, matrix elements, $G\left(X_S \mid X_S'\right)$, $Q\left(X_S \mid X_S'\right)$, and $F^\dagger\ (X_S \mid X_H)$ are calculated by substituting the spectrum of the angular frequency $\omega$ of the multiplicity of channels calculated by the spectrum calculation part 320 for Formulas (6.13), (7.3), and (6.14) described above.

Further, in the sound source search part 340 of the sound source search device 300 shown in Fig. 6, $v_z(X_S, z_S;\omega)$ is calculated by substituting $G(X_S \mid X_S)$, $Q\left(X_S \mid X_S'\right)$, and $F^\dagger(X_S \mid X_H)$ calculated by the matrix element calculation part 330 for the simultaneous equations (8.1) and solving the simultaneous equations (8.1).

Since discretization of the observation point (intervals between microphones 21, 22, 23, ... aligned in the microphone array 20 shown in Fig. 1) and discretization of the calculation point are performed at the same density in the present embodiment, Formula (8.1) is transformed as Formula (8.2). In the present embodiment, by substituting the matrix elements $G\left(X_S \mid X_S'\right)$, $Q\left(X_S \mid X_S'\right)$, and $F^\dagger(X_S \mid X_H)$ calculated by the matrix element calculation part 330 for the simultaneous equations (8.2) and solving the simultaneous equations (8.2), $v_z(X_S, z_S;\omega)$, i.e. the

particle velocity distribution in the z-direction of the angular frequency $\omega$ on the x-y plane of $z=z_S$ is calculated.

Fig. 7 depicts a calculation result by the Fourier transform method that has been conventionally widely used, the Fourier transform method being an analytical method of the near-field acoustical holography. Fig. 7 serves as an example for comparison with the present invention.

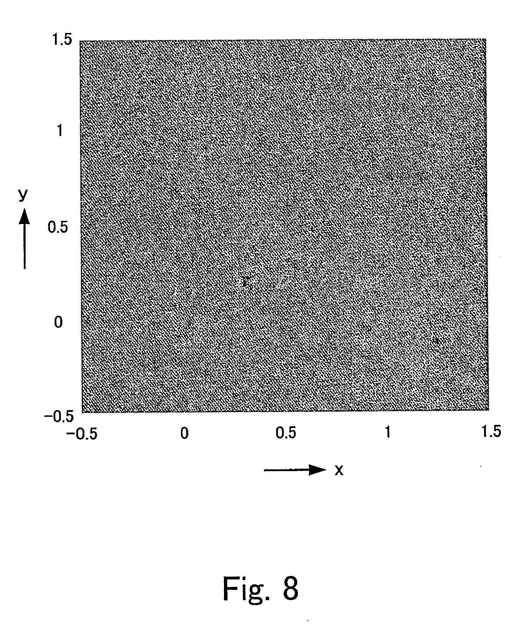

Fig. 8 depicts a particle velocity distribution obtained in accordance with the present embodiment. Fig. 8 serves as an example of the first invention.

As can be clearly seen by comparing Figs. 7 and 8, the example shown in Fig. 8 identifies sound source locations with higher accuracy.

Next, an embodiment of the second invention will be described.

Figs. 1 to 7 have been described above as figures showing the embodiment of the first invention. Although the first invention and the second invention are different in terms of arithmetic algorithm, they are the same in terms of what are shown in these figures. Therefore, Figs. 1 to 6 are employed as figures showing the embodiment of the second invention and the description of these figures will not be provided here and only the algorithm of the second invention will be described below.

In a manner similar to the embodiment of the first invention, the data acquisition part 310 shown in Fig. 6 acquires time series data of a multiplicity of channels corresponding to the received sound signals of a multiplicity of channels generated by a multiplicity of microphones 21, 22, 23, ... constituting the microphone array 20 shown in Fig. 1.

The spectrum calculation part 320 then uses FFT (Fast Fourier Transform) or the like, subjecting the time series data of the channels to the discrete Fourier transform. In this case, it is preferable to take a measure to obtain a spectrum of a desired angular frequency $\omega$ with sufficiently high accuracy. To obtain the spectrum of the desired angular frequency $\omega$ with sufficiently high accuracy, although a measure can be taken such as to make the sampling time intervals in the analog-digital conversion part 302 small enough, it is preferable to use algorithms proposed in Japanese Patent Laid-Open No. 2002-278948 described above. However, the present embodiment does not intend to elicit the method to obtain the highly accurate spectrum of the desired angular frequency $\omega$, and thus, detailed description in regard to that will not be further stated.

In the following matrix element calculation part 330, matrix elements $G(\boldsymbol{X}_{Sm}|X_{Sn})$, $Q(\boldsymbol{X}_{Sm}|X_{Sn})$ and $F^{(a,b)\dagger}(\boldsymbol{X}_{Sm}|\boldsymbol{X}_{Hn})$ are calculated by substituting the spectrum of the angular frequency $\omega$ of the multiplicity of channels calculated by the spectrum calculation part 320 for Formulas (14.12), (14.13), and (14.14a) described above.

In the present embodiment, when calculating the matrix element $G(\boldsymbol{X}_{Sm}|\boldsymbol{X}_{Sn})$, Formula (16.1) is used as $W(\boldsymbol{K})$ in Formula (14.12), and the matrix element $G(\boldsymbol{X}_{Sm}|\boldsymbol{X}_{Sn})$ is calculated by substituting the spectrum of the angular frequency $\omega$ of the multiplicity of channels calculated by the spectrum calculation part 320 for Formula (16.2) which is obtained by transforming the Formula (14.12) using Formula (16.1).

In a similar way, in the present embodiment, when calculating the matrix element $Q(\boldsymbol{X}_{Sm}|\boldsymbol{X}_{Sn})$, Formula (16.4) is used as $D^*(\boldsymbol{K})D(\boldsymbol{K})$ in Formula (14.13), and the matrix element $Q(\boldsymbol{X}_{Sm}|\boldsymbol{X}_{Sn})$ is calculated by substituting the spectrum of the angular frequency $\omega$ of the multiplicity of channels calculated by the spectrum calculation part 320 for Formula (16.5) which is obtained by transforming the Formula (14.13) using Formula (16.4).

In a similar way, in the present embodiment, when calculating the matrix element $F^{(a,b)\dagger}(\boldsymbol{X}_{Sm}|\boldsymbol{X}_{Hn})$, as in the calculation of the matrix element $G(\boldsymbol{X}_{Sm}|\boldsymbol{X}_{Sn})$, Formula (16.1) is used as $W(\boldsymbol{K})$ in Formula (14.14a), and the matrix element $F^{(a,b)\dagger}(\boldsymbol{X}_{Sm}|\boldsymbol{X}_{Hn})$ is calculated by substituting the spectrum of the angular frequency $\omega$ of the multiplicity of channels calculated by the spectrum calculation part 320 for Formula (16.3) which is obtained by transforming the Formula (14.14a) using Formula (16.1).

Furthermore, the sound source search part 340 of the sound source search device 300 shown in Fig. 6 calculates $\chi(\boldsymbol{X}_{Sn}, z_S; \omega)$ by substituting the matrix elements $G(\boldsymbol{X}_{Sm}|\boldsymbol{X}_{Sn})$, $Q(\boldsymbol{X}_{Sm}|\boldsymbol{X}_{Sn})$, and $F^{(a,b)\dagger}(\boldsymbol{X}_{Sm}|\boldsymbol{X}_{Hn})$ calculated by the matrix element calculation part 330 for the simultaneous equations (15.1) and solving the simultaneous equations (15.1).

Since discretization of the observation point (intervals between microphones 21, 22, 23, ... aligned in the microphone array 20 shown in Fig. 1) and discretization of the calculation point are performed at the same density in the present embodiment, Formula (5.1) is transformed as Formula (15.2). In the present embodiment, $\chi(\boldsymbol{X}_{Sn}, z_S; \omega) = V_Z(\boldsymbol{X}_{Sn}, z_S; \omega)$ is calculated by substituting the matrix elements $G(\boldsymbol{X}_{Sm}|X_{Sn})$, $Q(\boldsymbol{X}_{Sm}|\boldsymbol{X}_{Sn})$, and $F^{(a,b)\dagger}(\boldsymbol{X}_{Sm}|\boldsymbol{X}_{Hn})$ calculated by the matrix element calculation part 330 for the simultaneous equations (15.2) and solving the simultaneous equations (15.2).

More specifically, in the present embodiment, $V_z(\boldsymbol{X}_{Sn}, z_S; \omega)$ is adopted as $\chi(\boldsymbol{X}_{Sn}, z_S; \omega)$ to calculate the particle velocity distribution in the z-direction of the angular frequency $\omega$ on the x-y plane of $z=z_S$.

Fig. 7 depicts a calculation result by the Fourier transform method that has been conventionally widely used, the Fourier transform method being an analytical method of the near-field acoustical holography. Fig. 7 serves as an example for comparison with the present invention.

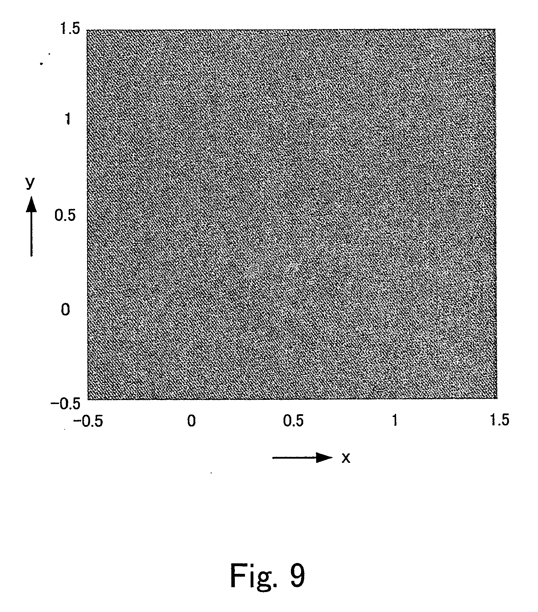

Fig. 9 depicts a particle velocity distribution obtained in accordance with the present embodiment. Fig. 9 serves as an example of the second invention.

As can be clearly seen by comparing Figs. 7 and 9, the example shown in Fig. 9 identifies sound source locations with higher accuracy.

**Claims**

1.   A sound source search method comprising:

a data acquisition step of acquiring time series data of multiple channels generated by picking up sounds generated from sound sources existing on the x-y plane of $z=z_S$ at multiple points dispersed on the x-y plane of $z=z_H$;

a spectrum calculation step of generating a spectrum with a desired angular frequency $\omega$ of the multiple channels by subjecting the time series data of the multiple channels acquired in the data acquisition step to the discrete Fourier transform for each channel;

a matrix element calculation step of calculating matrix elements $G\!\left(X_S \mid X_S'\right), Q\!\left(X_S \mid X_S'\right),$

and $F^\dagger(X_S|X_H)$, and by substituting the spectrum with the angular frequency $\omega$ of the multiple channels calculated in the spectrum generation step for formulas

$$G\!\left(X_S \mid X_S'\right) = \sum_{\mu=1}^{M_H} G_\omega^{RB(-)}\!\left(X_{H\mu} \mid X_S\right) w_{H\mu} G_\omega^{RB(+)}\!\left(X_{H\mu} \mid X_S'\right)$$

$$(6.13),$$

$$Q\!\left(X_S \mid X_S'\right) =$$

$$= \frac{1}{k_0^{\,2\mu+2}} \int_0^{k_0} J_0\!\left(K\middle|X_S - X_S'\middle|\right) \cdot K^{2\mu+1} \frac{\left(k_0^{\,2} - K^2\right)^{v'/2}}{k_0^{\,v'}} \, dK$$

$$+ \frac{1}{k_0^{\,2\mu+2}} \int_{k_0}^{\infty} \left\{ \begin{array}{l} J_0\!\left(K\middle|X_S - X_S'\middle|\right) \cdot \exp\!\left(-2\left(K^2 - k_0^{\,2}\right)^{1/2}\left(z_H - z_S\right)\right) \cdot \\[2mm] \cdot K^{2\mu+1} \cdot \dfrac{\left(K^2 - k_0^{\,2}\right)^{v'/2}}{k_0^{\,v'}} \end{array} \right\} dK$$

$$(7.3),$$

where, ($\mu \geq 0$, v'$\geq$-1), and

$$F^{\dagger}\left(X_S \mid X_H\right) = -j\frac{1}{k_0}\sum_{\mu=1}^{M_H} G_\omega^{RB(-)}\left(X_{H\mu} \mid X_S\right) w_{H\mu}\delta\left(X_H - X_{H\mu}\right)$$

$$(6.14);$$

and

a sound source search step of calculating $v_Z(X_S,z_S;\omega)$ by substituting the matrix elements

$$G\left(X_S \mid X_S'\right), Q\left(X_S \mid X_S'\right),$$ and $F^{\dagger}(X_S|X_H)$ calculated in the matrix element calculation step for simultaneous equations

$$\sum_n \left\{G\left(X_{Sm} \mid X_{Sn}\right) + \lambda Q\left(X_{Sm} \mid X_{Sn}\right)\right\} v_Z\left(X_{Sn},z_S;\omega\right)\left|\Delta X_S\right|$$

$$= \sum_n F^{(a,b)\dagger}\left(X_{Sm} \mid X_{Hn}\right)\frac{P_{Obs}\left(X_{Hn},z_H;\omega\right)}{\rho_0 c_0}\left|\Delta X_H\right|$$

$$(8.1)$$

and solving the simultaneous equations (8.1).

2. The sound source search method according to claim 1, wherein the sound source search step is a step of calculating $v_Z(X_S,z_S;\omega)$ by discretizing an observation point and a calculation point at the same density, substituting

$$G\left(X_S \mid X_S'\right), Q\left(X_S \mid X_S'\right),$$ and $F^{\dagger}(X_S|X_H)$ for simultaneous equations

$$\sum_n \left\{G\left(X_{Sm} \mid X_{Sn}\right) + \lambda Q\left(X_{Sm} \mid X_{Sn}\right)\right\} v_Z\left(X_{Sn},z_S;\omega\right)$$

$$= \sum_n F^{(a,b)\dagger}\left(X_{Sm} \mid X_{Hn}\right)\frac{P_{Obs}\left(X_{Hn},z_H;\omega\right)}{\rho_0 c_0} \qquad (8.2),$$

in place of the simultaneous equations (8.1), and solving the simultaneous equations (8.2).

3. The sound source search method according to claim 1 or 2, wherein the data acquisition step is a step of acquiring the time series data of the multiple channels corresponding to the points by multiple microphones picking up sounds generated from sound sources existing on the x-y plane of $z=z_S$, the microphones placed at the multiple points on the x-y plane of $z=z_H$.

4. The sound source search method according to claim 1 or 2, wherein the data acquisition step is a step of acquiring the time series data of the multiple channels corresponding to the points by a microphone picking up sounds generated from sound sources existing on the x-y plane of $z=z_S$, the microphone moving through the multiple points on the x-y plane of $z=z_H$.

5. A sound source search device comprising:

a data acquisition part acquiring time series data of multiple channels generated by picking up sounds generated from sound sources existing on the x-y plane of $z=z_S$ at multiple points dispersed on the x-y plane of $z=z_H$;
a spectrum calculation part calculating a spectrum with a desired angular frequency $\omega$ of the multiple channels by subjecting the time series data of the multiple channels acquired by the data acquisition part to the discrete Fourier transform for each channel;
a matrix element calculation part calculating matrix elements $G(X_S \mid X'_S)$, $Q(X_S|X'_S)$, and $F^{\dagger}(X_S|X_H)$, by substituting the spectrum with the angular frequency $\omega$ of the multiple channels calculated by the spectrum calculation part for formulas

$$G\left(X_S \mid X'_S\right) = \sum_{\mu=1}^{M_H} G_{\omega}^{RB(-)}\left(X_{H\mu} \mid X_S\right) w_{H\mu} G_{\omega}^{RB(+)}\left(X_{H\mu} \mid X'_S\right)$$

$$(6.13)$$

$$Q\left(X_S \mid X'_S\right) =$$

$$= \frac{1}{k_0^{2\mu+2}} \int_0^{k_0} J_0\left(K|X_S - X'_S|\right) \cdot K^{2\mu+1} \frac{\left(k_0^2 - K^2\right)^{\nu'/2}}{k_0^{\nu'}} dK$$

$$+ \frac{1}{k_0^{2\mu+2}} \int_{k_0}^{\infty} \left\{ \begin{array}{l} J_0\left(K|X_S - X'_S|\right) \cdot \exp\left(-2\left(K^2 - k_0^2\right)^{1/2}\left(z_H - z_S\right)\right) \cdot \\ \cdot K^{2\mu+1} \cdot \dfrac{\left(K^2 - k_0^2\right)^{\nu'/2}}{k_0^{\nu'}} \end{array} \right\} dK$$

$$(7.3),$$

where, ($\mu \geq 0$, $\nu' \geq -1$), and

$$F^{\dagger}\left(X_S \mid X_H\right) = -j \frac{1}{k_0} \sum_{\mu=1}^{M_H} G_{\omega}^{RB(-)}\left(X_{H\mu} \mid X_S\right) w_{H\mu} \delta\left(X_H - X_{H\mu}\right)$$

$$(6.14);$$

and

a sound source search part calculating $v_z(\boldsymbol{X}_S,z_S;\omega)$ by substituting the matrix elements $G\left(X_S \mid X_S'\right)$, $Q\left(X_S \mid X_S'\right)$, and $F^\dagger(\boldsymbol{X}_S|\boldsymbol{X}_H)$ calculated in the matrix element calculation part for simultaneous equations

$$\sum_n \left\{ G\left(X_{Sm} \mid X_{Sn}\right) + \lambda Q\left(X_{Sm} \mid X_{Sn}\right) \right\} v_Z\left(X_{Sn}, z_S; \omega\right)\left|\Delta X_S\right|$$

$$= \sum_n F^{(a,b)\dagger}\left(X_{Sm} \mid X_{Hn}\right)\frac{P_{Obs}\left(X_{Hn}, z_H; \omega\right)}{\rho_0 c_0}\left|\Delta X_H\right|$$

$$(8.1)$$

and solving the simultaneous equations (8.1).

6. The sound source search device according to claim 5, wherein the sound source search device discretizes the observation point and the calculation point at the same density, and the sound source search part calculates $v_z(\boldsymbol{X}_S, z_S;\omega)$ by discretizing an observation point and a calculation point at the same density, substituting $G(\boldsymbol{X}_S|\boldsymbol{X}_S')$, $Q(\boldsymbol{X}_S|\boldsymbol{X}_S')$, and $F^\dagger(\boldsymbol{X}_S|\boldsymbol{X}_H)$ for simultaneous equations

$$\sum_n \left\{ G\left(X_{Sm} \mid X_{Sn}\right) + \lambda Q\left(X_{Sm} \mid X_{Sn}\right) \right\} v_Z\left(X_{Sn}, z_S; \omega\right)$$

$$= \sum_n F^{(a,b)\dagger}\left(X_{Sm} \mid X_{Hn}\right)\frac{P_{Obs}\left(X_{Hn}, z_H; \omega\right)}{\rho_0 c_0} \qquad (8.2),$$

in place of the simultaneous equations (8.1), and solving the simultaneous equations (8.2).

7. The sound source search device according to claim 5 or 6, wherein the data acquisition part acquires the time series data of the multiple channels corresponding to the points by multiple microphones picking up sounds generated from sound sources existing on the x-y plane of $z=z_S$, the microphones placed at the multiple points on the x-y plane of $z=z_H$.

8. The sound source search device according to claim 5 or 6, wherein the data acquisition part acquires the time series data of the multiple channels corresponding to the points by a microphone picking up sounds generated from sound sources existing on the x-y plane of $z=z_S$, the microphone moving through the multiple points on the x-y plane of $z=z_H$.

9. A sound source search program storage medium which stores a sound source search program executed in an arithmetic processor executing programs and causing the arithmetic processor to operate as a sound source identification device, the sound source identification device comprising:

a data acquisition part acquiring time series data of multiple channels generated by picking up sounds generated from sound sources existing on the x-y plane of $z=z_S$ at multiple points dispersed on the x-y plane of $z = z_H$;
a spectrum calculation part calculating a spectrum with a desired angular frequency $\omega$ of the multiple channels by subjecting the time series data of the multiple channels acquired by the data acquisition part to the discrete Fourier transform for each channel;

a matrix element calculation part calculating matrix elements $G\!\left(X_S \mid X_S'\right)$, $Q\!\left(X_S \mid X_S'\right)$, and $F^\dagger(X_S \mid X_H)$, by substituting the spectrum with the angular frequency $\omega$ of the multiple channels calculated by the spectrum calculation part for formulas

$$G\!\left(X_S \mid X_S'\right) = \sum_{\mu=1}^{M_H} G_\omega^{RB(-)}\!\left(X_{H\mu} \mid X_S\right) w_{H\mu} G_\omega^{RB(+)}\!\left(X_{H\mu} \mid X_S'\right)$$

$$(6.13)$$

$$Q\!\left(X_S \mid X_S'\right) =$$

$$= \frac{1}{k_0^{2\mu+2}} \int_0^{k_0} J_0\!\left(K\mid X_S - X_S'\mid\right) \cdot K^{2\mu+1} \frac{\left(k_0^2 - K^2\right)^{\nu'/2}}{k_0^{\nu'}} dK$$

$$+ \frac{1}{k_0^{2\mu+2}} \int_{k_0}^{\infty} \left\{ \begin{array}{l} J_0\!\left(K\mid X_S - X_S'\mid\right) \cdot \exp\!\left(-2\left(K^2 - k_0^2\right)^{1/2}\left(z_H - z_S\right)\right) \cdot \\[2mm] \cdot K^{2\mu+1} \cdot \dfrac{\left(K^2 - k_0^2\right)^{\nu'/2}}{k_0^{\nu'}} \end{array} \right\} dK$$

$$(7.3),$$

where, ($\mu \geq 0$, $\nu' \geq -1$), and

$$F^\dagger\!\left(X_S \mid X_H\right) = -j\frac{1}{k_0} \sum_{\mu=1}^{M_H} G_\omega^{RB(-)}\!\left(X_{H\mu} \mid X_S\right) w_{H\mu} \delta\!\left(X_H - X_{H\mu}\right)$$

$$(6.14);$$

and

a sound source search part calculating $v_Z(X_S, z_S; \omega)$ by substituting the matrix elements $G\!\left(X_S \mid X_S'\right)$,

$$Q\left(X_S \mid X_S'\right),$$ and $F^{\dagger}(\boldsymbol{X}_S|\boldsymbol{X}_H)$ calculated in the matrix element calculation part for simultaneous equations

$$\sum_n \left\{ G\left(X_{Sm} \mid X_{Sn}\right) + \lambda Q\left(X_{Sm} \mid X_{Sn}\right) \right\} v_Z\left(X_{Sn}, z_S; \omega\right) \left| \Delta X_S \right|$$
$$= \sum_n F^{(a,b)^{\dagger}}\left(X_{Sm} \mid X_{Hn}\right) \frac{P_{Obs}\left(X_{Hn}, z_H; \omega\right)}{\rho_0 c_0} \left| \Delta X_H \right|$$

$$(8.1)$$

and solving the simultaneous equations (8.1).

10. The sound source search program storage medium according to claim 9, wherein the sound source search program causes discretization of an observation point and a calculation point at the same density, and the sound source search part calculates $v_z(\boldsymbol{X}_s, z_s; \omega)$ by discretizing an observation point and a calculation point at the same density, substituting $$G\left(X_S \mid X_S'\right), \quad Q\left(X_S \mid X_S'\right),$$ and $F^{\dagger}(\boldsymbol{X}_S|\boldsymbol{X}_H)$, for simultaneous equations

$$\sum_n \left\{ G\left(X_{Sm} \mid X_{Sn}\right) + \lambda Q\left(X_{Sm} \mid X_{Sn}\right) \right\} v_Z\left(X_{Sn}, z_S; \omega\right)$$
$$= \sum_n F^{(a,b)^{\dagger}}\left(X_{Sm} \mid X_{Hn}\right) \frac{P_{Obs}\left(X_{Hn}, z_H; \omega\right)}{\rho_0 c_0} \qquad (8.2),$$

in place of the simultaneous equations (8.1), and solving the simultaneous equations (8.2).

11. The sound source search program storage medium according to claim 9 or 10, wherein the data acquisition part acquires the time series data of the multiple channels corresponding to the points by multiple microphones picking up sounds generated from sound sources existing on the x-y plane of $z=z_S$, the microphones placed at the multiple points on the x-y plane of $z=z_H$.

12. The sound source search program storage medium according to claim 9 or 10, wherein the data acquisition part acquires the time series data of the multiple channels corresponding to the points by a microphone picking up sounds generated from sound sources existing on the x-y plane of $z=z_S$, the microphone moving through the multiple points on the x-y plane of $z=z_H$.

13. A sound source search method comprising:

a data acquisition step of acquiring time series data of multiple channels generated by picking up sounds generated from sound sources existing on the x-y plane of $z=z_S$ at multiple points dispersed on the x-y plane of $z=z_H$;
a spectrum calculation step of generating a spectrum with a desired angular frequency $\omega$ of the multiple channels by subjecting the time series data of the multiple channels acquired in the data acquisition step to the discrete Fourier transform for each channel;
a matrix element calculation step of calculating matrix elements $G(\boldsymbol{X}_{Sm}|\boldsymbol{X}_{Sn})$, $Q(\boldsymbol{X}_{Sm}|\boldsymbol{X}_{Sn})$, and $F^{(a,b)\dagger}(\boldsymbol{X}_{Sm}|\boldsymbol{X}_{Hn})$ by substituting the spectrum with the angular frequency $\omega$ of the multiple channels calculated in the spectrum generation step for formulas

$$G\left(X_S \mid X_S'\right) = \int \langle X_S \mid K\rangle H^{(\bullet)^*}(K) W(K) H^{(\bullet)}(K) \langle K \mid X_S'\rangle dK$$

(14.12),

$$Q\left(X_S \mid X_S'\right) = \int \langle X_S \mid K\rangle D^*(K) D(K) \langle K \mid X_S'\rangle dK$$

(14.13),

and

$$F^\dagger\left(X_S \mid X_H\right) = \rho_0 c_0 \int \langle X_S \mid K\rangle H^{(\bullet)^*}(K) W(K) \langle K \mid X_H\rangle dK$$

(14.14a);

and
a sound source search step of calculating $\chi(\boldsymbol{X}_{Sn},\boldsymbol{Z}_S;\omega)$ by substituting the matrix elements $G(\boldsymbol{X}_{Sm}|\boldsymbol{X}_{Sn})$, $Q(\boldsymbol{X}_{Sm}|\boldsymbol{X}_{Sn})$, and $F^{(a,b)\dagger}(\boldsymbol{X}_{Sm}|\boldsymbol{X}_{Hn})$ calculated in the matrix element calculation step for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn}, z_S; \omega\right) \left|\Delta X_S\right|$$

$$= \sum_n F^{(a,b)\dagger}\left(X_{Sm} \mid X_{Hn}\right) \frac{P_{Obs}\left(X_{Hn}, z_H; \omega\right)}{\rho_0 c_0} \left|\Delta X_H\right|$$

(15.1)

and solving the simultaneous equations (15.1).

**14.** The sound source search method according to claim 13, wherein the sound source search step is a step of calculating $\chi(\boldsymbol{X}_{Sn},\boldsymbol{Z}_S;\omega)$ by discretizing an observation point and a calculation point at the same density, substituting $G(\boldsymbol{X}_{Sm}|\boldsymbol{X}_{Sn})$, $Q(\boldsymbol{X}_{Sm}|\boldsymbol{X}_{Sn})$, and $F^{(a,b)\dagger}(\boldsymbol{X}_{Sm}|\boldsymbol{X}_{Hn})$ for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn}, z_S; \omega\right)$$

$$= \sum_n F^{(a,b)\dagger}\left(X_{Sm} \mid X_{Hn}\right) \frac{P_{Obs}\left(X_{Hn}, z_H; \omega\right)}{\rho_0 c_0}$$

$$\qquad (15.2),$$

in place of the simultaneous equations (15.1), and solving the simultaneous equations (15.2).

**15.** The sound source search method according to claim 13 or 14, wherein the sound source search step is a step of calculating $\chi(X_{Sn}, z_S; \omega) = V_z(X_{Sn}, z_S; \omega)$

**16.** The sound source search method according to any one of claims 13 to 15, wherein the matrix element calculation step is a step of calculating the matrix element $G(X_{Sm} \mid X_{Sn})$ by substituting the spectrum of the angular frequency $\omega$ of the multiple channels calculated in the spectrum calculation step for formula

$$G\left(X_S \mid X_S'\right) =$$

$$= \frac{1}{k_0^2} \int_0^{k_0} J_0\left(K \mid X_S - X_S' \mid\right) \frac{\left(k_0^2 - K^2\right)^{(\nu-2)/2}}{k_0^{\nu-2}} K dK$$

$$+ \frac{1}{k_0^2} \int_{k_0}^{\infty} \frac{J_0\left(K \mid X_S - X_S' \mid\right) \cdot \exp\left(-2\left(K^2 - k_0^2\right)^{1/2}\left(z_H - z_S\right)\right)}{k_0^{\nu-2}} \cdot \left(K^2 - k_0^2\right)^{(\nu-2)/2} K dK$$

$$\qquad (16.2)$$

adopting

$$W(K) = \frac{\left| \zeta_C(K; k_0) \right|^{-\nu}}{2\pi(\rho_0 c_0)^2 k_0^2} = \frac{1}{2\pi(\rho_0 c_0)^2 k_0^2} \left| \frac{\Gamma(K; k_0)}{k_0} \right|^{\nu}, \quad (\nu \geq 1)$$

$$\qquad (16.1)$$

as $W(K)$ in Formula (14.12), in place of the Formula (14.12), when calculating the matrix element $G(X_{Sm} \mid X_{Sn})$

**17.** The sound source search method according to any one of claims 13 to 16, wherein

the matrix element calculation step is a step of calculating the matrix element $Q(X_{Sm}|X_{Sn})$ by substituting the spectrum of the angular frequency of the multiple channels calculated in the spectrum calculation step for formula

$$Q(X_S \mid X_S') =$$

$$= \frac{1}{k_0^{2\mu+2}} \int_0^{k_0} J_0(K|X_S - X_S'|) \cdot K^{2\mu+1} \frac{(k_0^2 - K^2)^{\nu/2}}{k_0^{\nu}} dK$$

$$+ \frac{1}{k_0^{2\mu+2}} \int_{k_0}^{\infty} \frac{J_0(K|X_S - X_S'|) \cdot \exp\left(-2(K^2 - k_0^2)^{1/2}(z_H - z_S)\right) \cdot}{k_0 \cdot K^{2\mu+1} \cdot \frac{(K^2 - k_0^2)^{\nu/2}}{k_0^{\nu}}} dK$$

adopting

$$D^*(K)D(K)$$

$$= \frac{1}{2\pi \cdot k_0^{2\mu+2}} K^{2\mu} \left|\frac{\Gamma(K; k_0)}{k_0}\right|^{\nu'} \exp\left(j(\Gamma^*(K; k_0) - \Gamma(K; k_0))(z_H - z_S)\right)$$

$$(\mu \geq 0, \quad \nu' \geq -1)$$

$$(16.4)$$

as $D^*(K)D(K)$ in Formula (14.13), in place of the Formula (4.13), when calculating the matrix element $Q(X_{Sm} \mid X_{Sn})$

**18.** The sound source search method according to any one of claims 13 to 17, wherein the matrix element calculation step is a step of calculating the matrix element $F^{(a,b)\dagger}(X_{Sm}|X_{Hn})$ by substituting the spectrum of the angular frequency $\omega$ of the multiple channels calculated in the spectrum calculation step for formula

$$F^{\dagger}\left(X_S \mid X_H\right)=$$

$$= \frac{1}{k_0^2} \cdot \int_0^{k_0} J_0\left(K|X_S - X_H|\right) \cdot \frac{\left(k_0^2 - K^2\right)^{(v-1)/2}}{k_0^{v-1}} \cdot$$

$$\cdot \exp\left(j\Gamma(K; k_0)(z_H - z_S)\right)KdK$$

$$- j\frac{1}{k_0^2}\int_{k_0}^{\infty} J_0\left(K|X_S - X_H|\right) \cdot \frac{\left(K^2 - k_0^2\right)^{(v-1)/2}}{k_0^{v-1}} \cdot$$

$$\cdot \exp\left(-\left(K^2 - k_0^2\right)^{1/2}(z_H - z_S)\right)KdK$$

$$(16.3)$$

adopting

$$W(K) = \frac{\left|\zeta_C(K; k_0)\right|^{-v}}{2\pi(\rho_0 c_0)^2 k_0^2} = \frac{1}{2\pi(\rho_0 c_0)^2 k_0^2}\left|\frac{\Gamma(K; k_0)}{k_0}\right|^v, \quad (v \geq 1)$$

$$(16.1)$$

as $W(K)$ in Formula (14.14a), in place of the Formula (14.14a), when calculating the matrix element $F^{(a,b)\dagger}(X_{Sm}|X_{Hn})$

19. The sound source search method according to any one of claims 13 to 17, wherein the data acquisition step is a step of acquiring the time series data of the multiple channels corresponding to the points by multiple microphones picking up sounds generated from sound sources existing on the x-y plane of $z=z_S$, the microphones placed at the multiple points on the x-y plane of $z=z_H$.

20. The sound source search method according to any one of claims 13 to 17, wherein the data acquisition step is a step of acquiring the time series data of the multiple channels corresponding to the points by a microphone picking up sounds generated from sound sources existing on the x-y plane of $z=z_S$, the microphone moving through the multiple points on the x-y plane of $z=z_H$.

21. A sound source search device comprising:

a data acquisition part acquiring time series data of multiple channels generated by picking up sounds generated from sound sources existing on the x-y plane of $z=z_S$ at multiple points dispersed on the x-y plane of $z=z_H$;
a spectrum calculation part calculating a spectrum with a desired angular frequency $\omega$ of the multiple channels by subjecting the time series data of the multiple channels acquired by the data acquisition part to the discrete Fourier transform for each channel;
a matrix element calculation part calculating matrix elements $G(X_{Sm}|X_{Sn})$, $Q(X_{Sm}|X_{Sn})$, and $F^{(a,b)\dagger}(X_{Sm}|X_{Hn})$ by substituting the spectrum with the angular frequency $\omega$ of the multiple channels calculated by the spectrum calculation part for formulas

$$G(X_S \mid X_S') = \int \langle X_S \mid K \rangle H^{(\bullet)^*}(K) W(K) H^{(\bullet)}(K) \langle K \mid X_S' \rangle dK$$

$$(14.12),$$

$$Q(X_S \mid X_S') = \int \langle X_S \mid K \rangle D^*(K) D(K) \langle K \mid X_S' \rangle dK$$

$$(14.13),$$

and

$$F^\dagger(X_S \mid X_H) = \rho_0 c_0 \int \langle X_S \mid K \rangle H^{(\bullet)^*}(K) W(K) \langle K \mid X_H \rangle dK$$

$$(14.14a);$$

and

a sound source search part calculating $\chi(X_{Sn}, z_S; \omega)$ by substituting the matrix elements $G(X_{Sm}|X_{Sn})$, $Q(X_{Sm}|X_{Sn})$, and $F^{(a,b)\dagger}(X_{Sm}|X_{Hn})$ calculated by the matrix element calculation part for simultaneous equations

$$\sum_n \{ G(X_{Sm} \mid X_{Sn}) + \lambda Q(X_{Sm} \mid X_{Sn}) \} \chi(X_{Sn}, z_S; \omega) |\Delta X_S|$$

$$= \sum_n F^{(a,b)\dagger}(X_{Sm} \mid X_{Hn}) \frac{P_{Obs}(X_{Hn}, z_H; \omega)}{\rho_0 c_0} |\Delta X_H|$$

$$(15.1)$$

and solving the simultaneous equations (15.1).

22. The sound source search device according to claim 21, wherein the sound source search device discretizes the observation point and the calculation point at the same density, and the sound source search part calculates $\chi(X_{Sn}, z_S; \omega)$ by substituting $G(X_{Sm}|X_{Sn})$, $Q(X_{Sm}|X_{Sn})$, and $F^{(a,b)\dagger}(X_{Sm}|X_{Hn})$ for simultaneous equations

$$\sum_n \{ G(X_{Sm} \mid X_{Sn}) + \lambda Q(X_{Sm} \mid X_{Sn}) \} \chi(X_{Sn}, z_S; \omega)$$

$$= \sum_n F^{(a,b)\dagger}(X_{Sm} \mid X_{Hn}) \frac{P_{Obs}(X_{Hn}, z_H; \omega)}{\rho_0 c_0}$$

$$(15.2),$$

in place of the simultaneous equations (15.1), and solving the simultaneous equations (15.2).

**23.** The sound source search device according claim 21 or 22, wherein the sound source search part calculates $\chi(X_{Sn}, Z_S;\omega) = V_Z(X_{Sn}, Z_S;\omega)$

**24.** The sound source search device according to any one of claims 21 to 23, wherein
the matrix element calculation part calculates the matrix element $G(X_{Sm}|X_{Sn})$ by substituting the spectrum of the angular frequency $\omega$ of the multiple channels calculated by the spectrum calculation part for formula

$$
\begin{aligned}
G\left(X_S \mid X_S'\right) &= \\
&= \frac{1}{k_0{}^2} \int_0^{k_0} J_0\left(K|X_S - X_S'|\right) \frac{\left(k_0{}^2 - K^2\right)^{(v-2)/2}}{k_0{}^{v-2}} K dK \\
&+ \frac{1}{k_0{}^2} \int_{k_0}^{\infty} \frac{J_0\left(K|X_S - X_S'|\right) \cdot \exp\left(-2\left(K^2 - k_0{}^2\right)^{1/2}\left(z_H - z_S\right)\right)}{k_0{}^{v-2}} \cdot \left(K^2 - k_0{}^2\right)^{(v-2)/2} K dK
\end{aligned}
$$

$$(16.2)$$

adopting

$$
W(K) = \frac{\left|\zeta_C\left(K; k_0\right)\right|^{-v}}{2\pi\left(\rho_0 c_0\right)^2 k_0{}^2} = \frac{1}{2\pi\left(\rho_0 c_0\right)^2 k_0{}^2} \left|\frac{\Gamma\left(K; k_0\right)}{k_0}\right|^v, \quad (v \geq 1)
$$

$$(16.1)$$

as $W(K)$ in Formula (14.12), in place of the Formula (14.12), when calculating the matrix element $G(X_{Sm}|X_{Sn})$

**25.** The sound source search device according to any one of claims 21 to 24, wherein the matrix element calculation part calculates the matrix element $Q(X_{Sm} \mid X_{Sn})$ by substituting the spectrum of the angular frequency $\omega$ of the multiple channels calculated by the spectrum calculation part for formula

$$Q\left(X_S \mid X'_S\right)=$$

$$= \frac{1}{k_0^{2\mu+2}} \int_0^{k_0} J_0\left(K|X_S - X'_S|\right) \cdot K^{2\mu+1} \frac{\left(k_0^2 - K^2\right)^{\nu/2}}{k_0^\nu} dK$$

$$+ \frac{1}{k_0^{2\mu+2}} \int_{k_0}^\infty \frac{J_0\left(K|X_S - X'_S|\right) \cdot \exp\left(-2\left(K^2 - k_0^2\right)^{1/2}\left(z_H - z_S\right)\right)}{k_0 \cdot K^{2\mu+1} \cdot \frac{\left(K^2 - k_0^2\right)^{\nu/2}}{k_0^\nu}} dK$$

$$(16.5)$$

adopting

$$D^*\left(\mathbf{K}\right)D\left(\mathbf{K}\right)$$

$$= \frac{1}{2\pi \cdot k_0^{2\mu+2}} K^{2\mu} \left|\frac{\Gamma\left(\mathbf{K};k_0\right)}{k_0}\right|^{\nu'} \exp\left(j\left(\Gamma^*\left(\mathbf{K};k_0\right)-\Gamma\left(\mathbf{K};k_0\right)\right)\left(z_H - z_S\right)\right)$$

$$\left(\mu \geq 0, \quad \nu' \geq -1\right)$$

$$(16.4)$$

as $D^*(\mathbf{K})D(\mathbf{K})$ in Formula (14.13), in place of the Formula (14.13), when calculating the matrix element $Q(\mathbf{X}_{Sm}|\mathbf{X}_{Sn})$.

26. The sound source search device according to any one of claims 21 to 25, wherein the matrix element calculation part calculates the matrix element $F^{(a,b)\dagger}(X_{Sm}|X_{Hn})$ by substituting the spectrum of the angular frequency $\omega$ of the multiple channels calculated by the spectrum calculation part for formula

$$F^\dagger(X_S \mid X_H) =$$

$$= \frac{1}{k_0{}^2} \int_0^{k_0} J_0(K|X_S - X_H|) \cdot \frac{\left(k_0{}^2 - K^2\right)^{(\nu-1)/2}}{k_0{}^{\nu-1}} \cdot \exp\left(j\Gamma(K;k_0)(z_H - z_S)\right) K dK$$

$$- j\frac{1}{k_0{}^2} \int_{k_0}^{\infty} J_0(K|X_S - X_H|) \cdot \frac{\left(K^2 - k_0{}^2\right)^{(\nu-1)/2}}{k_0{}^{\nu-1}} \cdot \exp\left(-\left(K^2 - k_0{}^2\right)^{1/2}(z_H - z_S)\right) K dK$$

(16.3)

adopting

$$W(K) = \frac{|\varsigma_C(K;k_0)|^{-\nu}}{2\pi(\rho_0 c_0)^2 k_0{}^2} = \frac{1}{2\pi(\rho_0 c_0)^2 k_0{}^2} \left|\frac{\Gamma(K;k_0)}{k_0}\right|^{\nu}, \quad (\nu \geq 1)$$

(16.1)

as $W(K)$ in Formula (14.14a), in place of the Formula (14.14a), when calculating the matrix element $F^{(a,b)\dagger}(X_{Sm}|X_{Hn})$

27. The sound source search device according to any one of claims 21 to 26, wherein the data acquisition part acquires the time series data of the multiple channels corresponding to the points by multiple microphones picking up sounds generated from sound sources existing on the x-y plane of $z=z_S$, the microphones placed at the multiple points on the x-y plane of $z=z_H$.

28. The sound source search device according to any one of claims 21 to 26, wherein the data acquisition part acquires the time series data of the multiple channels corresponding to the points by a microphone picking up sounds generated from sound sources existing on the x-y plane of $z=z_S$, the microphone moving through the multiple points on the x-y plane of $z=z_H$.

29. A sound source search program storage medium which stores a sound source search program executed in an arithmetic processor executing programs and causing the arithmetic processor to operate as a sound source identification device, the sound source identification device comprising:

a data acquisition part acquiring time series data of multiple channels generated by picking up sounds generated from sound sources existing on the x-y plane of $z=z_S$ at multiple points dispersed on the x-y plane of $z=z_H$;
a spectrum calculation part calculating a spectrum with a desired angular frequency $\omega$ of the multiple channels by subjecting the time series data of the multiple channels acquired by the data acquisition part to the discrete Fourier transform for each channel;

a matrix element calculation part calculating matrix elements $G(X_{Sm}|X_{Sn})$, $Q(X_{Sm}|X_{Sn})$, and $F^{(a,b)\dagger}(X_{Sm}|X_{Hn})$ by substituting the spectrum with the angular frequency $\omega$ of the multiple channels calculated in the spectrum calculation step for formulas

$$G\left(X_S \mid X_S'\right) = \int \left\langle X_S \mid K \right\rangle H^{(\bullet)^*}(K) W(K) H^{(\bullet)}(K) \left\langle K \mid X_S' \right\rangle dK$$

$$(14.12),$$

$$Q\left(X_S \mid X_S'\right) = \int \left\langle X_S \mid K \right\rangle D^*(K) D(K) \left\langle K \mid X_S' \right\rangle dK$$

$$(14.13),$$

and

$$F^\dagger\left(X_S \mid X_H\right) = \rho_0 c_0 \int \left\langle X_S \mid K \right\rangle H^{(\bullet)^*}(K) W(K) \left\langle K \mid X_H \right\rangle dK$$

$$(14.14a);$$

and
a sound source search part calculating $\chi(X_{Sn}, z_S;\omega)$ by substituting the matrix elements $G(X_{Sm}|X_{Sn})$, $Q(X_{Sm}|X_{Sn})$, and $F^{(a,b)\dagger}(X_{Sm}|X_{Hn})$ calculated by the matrix element calculation part for simultaneous equations

$$\sum_n \left\{ G\left(X_{Sm} \mid X_{Sn}\right) + \lambda Q\left(X_{Sm} \mid X_{Sn}\right) \right\} \chi\left(X_{Sn}, z_S;\omega\right) \left| \Delta X_S \right|$$

$$= \sum_n F^{(a,b)\dagger}\left(X_{Sm} \mid X_{Hn}\right) \frac{P_{Obs}\left(X_{Hn}, z_H;\omega\right)}{\rho_0 c_0} \left| \Delta X_H \right|$$

$$(15.1)$$

and solving the simultaneous equations (15.1).

**30.** The sound source search program storage medium according to claim 29, wherein the sound source search program causes discretization of an observation point and a calculation point at the same density, and the sound source search part calculates $\chi(X_{Sn}, z_S;\omega)$ by substituting $G(X_{Sm}|X_{Sn})$, $Q(X_{Sm}|X_{Sn})$, and $F^{(a,b)\dagger}(X_{Sm}|X_{Hn})$ for simultaneous equations

$$\sum_{n}\left\{G(X_{Sm}\mid X_{Sn})+\lambda Q(X_{Sm}\mid X_{Sn})\right\}\chi(X_{Sn},z_S;\omega)$$

$$=\sum_{n}F^{(a,b)\dagger}(X_{Sm}\mid X_{Hn})\frac{P_{Obs}(X_{Hn},z_H;\omega)}{\rho_0 c_0}$$

$$(15.2),$$

in place of the simultaneous equations (15.1) and solving the simultaneous equations (15.2).

**31.** The sound source search program storage medium according to claim 29 or 30, wherein the sound source search part calculates $\chi(X_{Sn},z_S;\omega)=V_Z(X_{Sn},z_S;\omega)$

**32.** The sound source search program storage medium according to any one of claims 29 to 31, wherein the matrix element calculation part calculates the matrix element $G(X_{Sm}|X_{Sn})$ by substituting the spectrum of the angular frequency $\omega$ of the multiple channels calculated by the spectrum calculation part for formula

$$G(X_S \mid X_S') =$$

$$= \frac{1}{k_0^2}\int_0^{k_0} J_0(K|X_S-X_S'|)\frac{\left(k_0^2-K^2\right)^{(\nu-2)/2}}{k_0^{\nu-2}}KdK$$

$$+\frac{1}{k_0^2}\int_{k_0}^{\infty}\frac{J_0(K|X_S-X_S'|)\cdot\exp\left(-2\left(K^2-k_0^2\right)^{1/2}(z_H-z_S)\right)\left(K^2-k_0^2\right)^{(\nu-2)/2}}{k_0^{\nu-2}}KdK$$

$$(16.2)$$

adopting

$$W(K)=\frac{\left|\zeta_C(K;k_0)\right|^{-\nu}}{2\pi(\rho_0 c_0)^2 k_0^2}=\frac{1}{2\pi(\rho_0 c_0)^2 k_0^2}\left|\frac{\Gamma(K;k_0)}{k_0}\right|^{\nu},\quad (\nu\geq1)$$

$$(16.1)$$

as $W(\mathbf{K})$ in Formula (14.12), in place of the Formula (14.12), when calculating the matrix element $G(X_{Sm}|X_{Sn})$.

33. The sound source search program storage medium according to any one of claims 29 to 32, wherein the matrix element calculation part calculates the matrix element $Q(X_{Sm}|X_{Sn})$ by substituting the spectrum of the angular frequency $\omega$ of the multiple channels calculated by the spectrum calculation part for formula

$$Q(X_S|X_S') =$$

$$= \frac{1}{k_0^{2\mu+2}} \int_0^{k_0} J_0(K|X_S - X_S'|) \cdot K^{2\mu+1} \frac{\left(k_0^2 - K^2\right)^{\nu/2}}{k_0^{\nu}} dK$$

$$+ \frac{1}{k_0^{2\mu+2}} \int_{k_0}^{\infty} \frac{J_0(K|X_S - X_S'|) \cdot \exp\left(-2\left(K^2 - k_0^2\right)^{1/2}(z_H - z_S)\right) \cdot}{K^{2\mu+1} \cdot \frac{\left(K^2 - k_0^2\right)^{\nu/2}}{k_0^{\nu}}} dK$$

$$(16.5)$$

adopting

$$D^*(\mathbf{K})D(\mathbf{K})$$

$$= \frac{1}{2\pi \cdot k_0^{2\mu+2}} K^{2\mu} \left|\frac{\Gamma(\mathbf{K}; k_0)}{k_0}\right|^{\nu'} \exp\left(j\left(\Gamma^*(\mathbf{K}; k_0) - \Gamma(\mathbf{K}; k_0)\right)(z_H - z_S)\right)$$

$$(\mu \geq 0, \quad \nu' \geq -1)$$

$$(16.4)$$

as $D^*(K)D(K)$ in Formula (14.13), in place of the Formula (14.13), when calculating the matrix element $Q(X_{Sm}|X_{Sn})$

34. The sound source search program storage medium according to any one of claims 29 to 33, wherein the matrix element calculation part calculates the matrix element $F^{(a,b)\dagger}(X_{Sm}|X_{Hn})$ by substituting the spectrum of the angular frequency $\omega$ of the multiple channels calculated by the spectrum calculation part for formula

$$F^\dagger(X_S \mid X_H) =$$

$$= \frac{1}{k_0^2} \int_0^{k_0} J_0(K|X_S - X_H|) \cdot \frac{(k_0^2 - K^2)^{(\nu-1)/2}}{k_0^{\nu-1}} \cdot$$

$$\cdot \exp(j\Gamma(K;k_0)(z_H - z_S)) K dK$$

$$- j\frac{1}{k_0^2} \int_{k_0}^{\infty} J_0(K|X_S - X_H|) \cdot \frac{(K^2 - k_0^2)^{(\nu-1)/2}}{k_0^{\nu-1}} \cdot$$

$$\cdot \exp\left(-(K^2 - k_0^2)^{1/2}(z_H - z_S)\right) K dK$$

$$(16.3)$$

adopting

$$W(K) = \frac{|\varsigma_C(K;k_0)|^{-\nu}}{2\pi(\rho_0 c_0)^2 k_0^2} = \frac{1}{2\pi(\rho_0 c_0)^2 k_0^2}\left|\frac{\Gamma(K;k_0)}{k_0}\right|^{\nu}, \quad (\nu \geq 1)$$

$$(16.1)$$

as $W(K)$ $W(K)$ in Formula (14.14a), in place of the Formula (14.14a), when calculating the matrix element $F^{(a,b)\dagger}$ $(X_{Sm}|X_{Hn})$

35. The sound source search program storage medium according to any one of claims 29 to 34, wherein the data acquisition part acquires the time series data of the multiple channels corresponding to the points by multiple microphones picking up sounds generated from sound sources existing on the x-y plane of $z=z_S$, the microphones placed at the multiple points on the x-y plane of $z=z_H$.

36. The sound source search program storage medium according to any one of claims 29 to 34, wherein the data acquisition part acquires the time series data of the multiple channels corresponding to the points by a microphone picking up sounds generated from sound sources existing on the x-y plane of $z=z_S$, the microphone moving through the multiple points on the x-y plane of $z=z_H$.

Fig. 1

Fig. 2

Fig. 3

CD-ROM ⌐105

SOUND SOURCE SEARCH
PROGRAM ⌐200

DATA ACQUISITION PART ⌐210

SPECTRUM CALCULATION
PART ⌐220

MATRIX ELEMENT
CALCULATION PART ⌐230

SOUND SOURCE SEARCH
PART ⌐240

Fig. 4

START

ACQUIRE DATA (a)

CALCULATE SPECTRUM (b)

CALCULATE MATRIX
ELEMENT (c)

SEARCH SOUND SOURCE (d)

END

Fig. 5

Fig. 6

300

301 ANTI-ALIASING FILTER
302 ANALOG-DIGITAL CONVERSION PART
310 DATA ACQUISITION PART
320 SPECTRUM CALCULATION PART
330 MATRIX ELEMENT CALCULATION PART
340 SOUND SOURCE SEARCH PART

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002278948 A

### Non-patent literature cited in the description

- **E.G. WILLIAMS.** Fourier Acoustics; Sound Radiation and Nearfield Acoustical Holography. Academic Press, 1999
- **J. HALD.** Non-stationary STSF. *Bruel & Kjaer Technical Review,* 2000, 1-36
- **A. MESSIAH.** *Quantum Mechanics 1-3,* 1981
- **DIRAC.** *Quantum Mechanics,* 1968
- **L.S. RODBERG ; R.M. THALER.** Introduction to the Quantum Theory of Scattering. Academic Press, 1967